# EUROPEAN PATENT SPECIFICATION

(11) **EP 0 889 798 B1**
(45) Date of publication and mention of the grant of the patent: **22.12.1999**
(21) Application number: 97914015.9
(22) Date of filing: 27.03.1997
(51) Int. Cl.: B60N 2/00

(54) **ROLL-IN/ROLL-OUT VEHICLE SEAT SYSTEM WITH FIXED WHEELS**
EIN- UND AUSROLLBARES FAHRZEUGSITZSYSTEM MIT FESTEN RÄDERN
SYSTEME DE SIEGE DE VEHICULE A ROUES FIXES POUVANT ETRE ENTRE ET SORTI PAR ROULEMENT

(30) Priority: 28.03.1996 US 14275 P
(43) Date of publication of application: 13.01.1999
(73) Proprietor: Bertrand Faure Components Ltd., Mississauga, Ontario L5T 2B2 (CA)
(72) Inventor: SMUK, Wojciech, Troy, MI 48098 (US)
(74) Representative: Kirschner, Klaus Dieter, Dipl.-Phys.
(86) International application number: PCT/CA97/00210
(87) International publication number: WO 97/36765

(56) References cited:
- EP-A- 0 545 743
- US-A- 4 773 693
- US-A- 5 368 355
- US-A- 5 372 398
- US-A- 5 474 311

## Description

The present invention relates to removable vehicle seat systems for use in multi-seat vehicles, such as mini-vans, sport utility vehicles, and the like, and more particularly to wheeled vehicle seat systems that are rollable into wells in the vehicle floor to thereat releasably engage anchor members so as to selectively anchor the vehicle seat system to the vehicle floor (see, for example, US-A-5 474 311, corresponding to the preamble of claim 1.)

Multi-seat vehicles, such as vans, minivans, sport utility vehicles, and the like, typically have middle (second row) and rear (third row) vehicle seats that are placed rearwardly of the driver's and front passenger's (first row) vehicle seats, and are selectively removable and replaceable through a large rear door. Removal and replacement of these vehicle seats tends to be somewhat difficult and requires a considerable amount of effort on the part of the user, especially with respect to the middle vehicle seat. In order to reduce the effort required to remove or replace such a vehicle seat, recent vehicle seat systems have resorted to the mounting of front and rear wheel members on the laterally opposed rigid support structures associated with the underside of each vehicle seat. Such wheel members make it possible to selectively roll a vehicle seat into a design position within the vehicle, at which design position connecting means on each of the support structures can securely engage anchor members associated with respective wells positioned in the floor of the vehicle, thus releasably securing the vehicle seat system in place within the vehicle.

One prior art wheeled vehicle seat system is disclosed in U.S. Patent No. 5,372,398, issued December 13, 1994, to Aneiros *et al*., for a VEHICLE SEAT ASSEMBLY WITH RETRACTING LATCH/ENGAGING ROLLER SEAT-TO-FLOOR LOCK.

The vehicle seat system taught in U.S. Patent No. 5,372,398 employs front and rear latch members rotatably mounted one on each support structure of the vehicle seat system. Front and rear latch members are operatively joined together by a connecting rod so as to be concurrently rotatable one with the other in opposite directions by a manual operation of an actuating mechanism projecting rearwardly from the vehicle seat system. Each latch member includes a hook portion and a pair of axially aligned wheel members freely rotatably mounted thereon in offset relation to the hook portion.

In use, when the vehicle seat system of Aneiros *et al*. is being placed into or removed from a vehicle, the actuation mechanism is used to position the latch members such that the wheel members are in operative rolling contact with the vehicle floor, thus permitting the vehicle seat system to be rolled into place. Once the vehicle seat is in place, as determined by the front wheel members engaging respective locating grooves disposed forwardly of each front well, the actuating mechanism is used to rotate the latch members such that the wheel members are lifted from operative rolling contact with the vehicle floor and the hook portions are lowered, presumably into engagement with the respective striker pins, thus securing the vehicle seat within the vehicle.

While wheeled prior art removable vehicle seat systems, such as Aneiros *et al*., may represent a significant reduction in the amount of effort required to move the vehicle seat within the vehicle after the wheel members have been successfully deployed, the actual energy and manual dexterity required of a user to deploy or retract the wheel members from such deployment is not itself insignificant. Moreover, the complicated latching mechanisms of the prior art devices, including that of Aneiros *et al*. are themselves prone to mis-engagement during attempted latching to the vehicle, which mis-engagement is dangerous, and therefore, highly undesirable. Also, such complicated connecting mechanisms are liable to become mis-aligned, bent, or generally damaged over time, particularly when the seat mechanism is removed from the vehicle, which conditions make engagement with the anchor members on the vehicle even more difficult and prone to mis-engagement during attempted latching to the vehicle. Further, complicated connecting mechanisms are expensive to manufacture, and are less robust than they might otherwise be. Such mechanisms tend also to be unnecessarily heavy, thereby adding to vehicle ineconomy, to the effort required to lift the vehicle seat system out of the wells, and to otherwise handle the vehicle seat system. Lastly, with wheeled mechanisms according to the prior art, subsequent lifting of the vehicle seat system from the wells must be performed without substantial mechanical aid by the person removing the vehicle seat system. All of this leaves room for improvement in removable wheeled vehicle seat systems of the prior art.

Another inherent problem with vehicle seat systems employing wheel members that permit ready rolling of vehicle seats into place is that the middle (second row) vehicle seat must typically be installed into the vehicle before the rear (third row) vehicle seat, and must, for this reason, pass over the location of the rear vehicle seat. Accordingly, the middle vehicle seat may drop into place in the rear vehicle seat wells, unless specific accommodation is made to preclude the middle vehicle seat from falling into the rear vehicle seat wells.

It is an object of the present invention to provide a rolling vehicle seat system that is easy to remove from and replace into a vehicle.

It is a further object of the present invention to provide a rolling vehicle seat system with a simple and reliable connecting mechanism for releasable, securing engagement with the vehicle.

It is yet another object of the present invention to provide a rolling vehicle seat system wherein stationary wheel members are rotatably mounted on the seat structures to facilitate rolling of the seat structures into and out of the vehicle.

It is a further object of the present invention to provide a vehicle seat system disinclined to mis-engagement during attempted engagement of the connecting means onto respective anchor members.

It is an object of the present invention to provide a vehicle seat system wherein engagement of the connecting means to respective anchor members of the vehicle requires minimal user effort.

It is an object of the present invention to provide a vehicle seat system wherein disengagement of the connecting means from respective anchor members requires minimal effort.

It is another object of the present invention to provide a vehicle seat system wherein lifting of the vehicle seat system from the wells, subsequent to disengagement from respective anchor members, is aided by the vehicle seat system.

It is an object of the present invention to provide a vehicle seat system which is unlikely to become mis-aligned, bent, or generally damaged over time, particularly when the seat structures are removed from the vehicle.

It is an object of the present invention to provide a vehicle seat system that is simple and inexpensive to manufacture as compared to prior art vehicle seat systems having similar utility.

It is an object of the present invention to provide a vehicle seat system that is generally robust, as compared to prior art vehicle seat systems having similar utility.

It is an object of the present invention to provide a vehicle seat system that is lighter in weight than prior art rolling vehicle seat systems having similar utility.

It is an object of the present invention to provide a vehicle seat system wherein the middle (second row) vehicle seat is readily rollable into place in a vehicle over the location of the rear (third row) vehicle seat.

These and other objects of the present invention will become more apparent from the detailed description that follows.

In accordance with the present invention as defined in independent claim 1 there is disclosed a vehicle seat system for use with a vehicle, such as a mini-van, including floor means having upwardly facing surface means. The floor means also has a pair of front wells and a pair of rear wells, which wells would typically be positioned behind the first row of seats in the vehicle which accommodate the driver and the front passenger, which wells are disposed with respect to a longitudinal axis of the vehicle, extending below the upwardly facing surface means, and which wells have front and rear anchor members extending across the front and rear wells, respectively, in a position below the upwardly facing surface means. The vehicle seat system comprises a first cushioned seat structure and a first pair of rigid support structures disposed adjacent laterally opposite ends of the first cushioned seat structure, with the first cushioned seat structure mounted on the first pair of rigid support structures. Front connecting means are mounted on each of the rigid support structures for releasable, securing engagement with the respective ones of the front anchor members upon entry of the front connecting means into the front wells, and rear connecting means are mounted on each of the rigid support structures for releasable, securing engagement with the respective ones of the rear anchor members upon entry of the rear connecting means into the rear wells. Front and rear wheel members are mounted on each of the first pair of rigid support structures adjacent the respective front and rear connecting members so as to be in operative rolling contact with the upwardly facing surface means of the vehicle when the front and rear connecting means are removed from the respective front and rear wells. A pair of front track means are associated one each with the pair of front wells, the front track means each extending forwardly and downwardly, from a respective track entry position aft of the respective front well and atop the upwardly facing surface, to a base area of the respective front well positioned below the upwardly facing surface means. A pair of rear entry positions are associated one each with the pair of rear wells, such that the rear wells are each disposed forwardly from the respective rear entry position. The front track means are each positioned on the floor means to accept, in guiding relation, a respective one of the front wheel members upon forward rolling movement of the first cushioned seat structure and are shaped and dimensioned to thereafter guide each of the front wheel members, upon continued forward rolling movement, from the respective track entry position to the base area of the associated front well, and to thereat permit the front connecting means to each releasably, securely engage the respective ones of the front anchor members, thereby to releasably anchor the first cushioned seat structure to the vehicle. The rear entry positions are each positioned on the floor means to accept, in downwardly through passing relation, a respective one of the rear wheel members upon forward rolling movement of the first cushioned seat structure and thereafter to permit entry of each of the rear wheel members into the respective rear well, upon continued forward rolling movement, from the respective rear entry position to the base area of the associated rear well, and to thereat permit the rear connecting means to each releasably, securely engage the respective ones of the rear anchor members, thereby to releasably anchor the first cushioned seat structure to the vehicle.

The novel features which are believed to be characteristic of the vehicle seat system according to the present invention, as to its structure, organization, use and method of operation, together with further objectives and advantages thereof, will be better understood from the following drawings in which a presently preferred embodiment of the invention will now be illustrated by way of example. It is expressly understood, however, that the drawings are for the purpose of illustration and description only, and are not intended as a definition of the limits of the invention. Embodiments of this invention will now be described by way of example in association with the accompanying drawings in which:
**Figure 1** is a perspective view of a preferred embodiment of the vehicle seat system according to the present invention, with the middle (second row) vehicle seat being installed in a vehicle, which vehicle is partially shown in phantom outline;
**Figure 2** is a perspective view similar to **Figure 1,** with the middle (second row) vehicle seat fully installed in the vehicle;
**Figure 3** is a perspective view similar to **Figure 2,** with the rear (third row) vehicle seat also being installed in the vehicle;
**Figure 4** is a perspective view similar to **Figure 3,** with the rear (third row) vehicle seat fully installed in the vehicle;
**Figure 5** is a cross-sectional, side elevational view of the preferred embodiment of vehicle seat system of **Figure 1**, showing the middle (second row) vehicle seat being installed into the vehicle;
**Figure 6** is a view similar to **Figure 5,** with the middle (second row) vehicle seat partially in place, such that the front portions of the support structure of the middle (second row) vehicle seat are in place in the respective front wells, and with the rear portions of the support structure about to be lowered into the respective rear wells;
**Figure 7** is a view similar to **Figure 6,** but with the rear portions of the support structure of the middle (second row) vehicle seat also in place in the respective rear wells;
**Figure 8** is a view similar to **Figure 7,** with the rear (third row) vehicle seat also being installed into the vehicle;
**Figure 9** is a view similar to **Figure 8,** with the rear (third row) vehicle seat partially in place, such that the front portions of the support structure of the rear (third row) vehicle seat are in place in the respective front wells, and the rear portions of said support structure are about to be lowered into the respective rear wells;
**Figure 10** is a view similar to **Figure 9,** but with the rear portions of the support structure of the rear (third row) vehicle seat in place in the respective rear wells;
**Figure 11** is a cross-sectional, side elevational view of the preferred embodiment of the vehicle seat system of **Figure 1,** showing only the middle (second row) vehicle seat, with that vehicle seat having its rear locking means released for subsequent removal of the vehicle seat;
**Figure 12** is a view similar to **Figure 11,** with the middle (second row) vehicle seat partially removed; and,
**Figure 13** is a top pian view of the floor of the vehicle of **Figures 1 - 12,** diagrammatically showing the positioning of the wheel members of the vehicle seat system of said Figures, when the middle (second row) and rear (third row) vehicle seats are both fully installed in the vehicle.

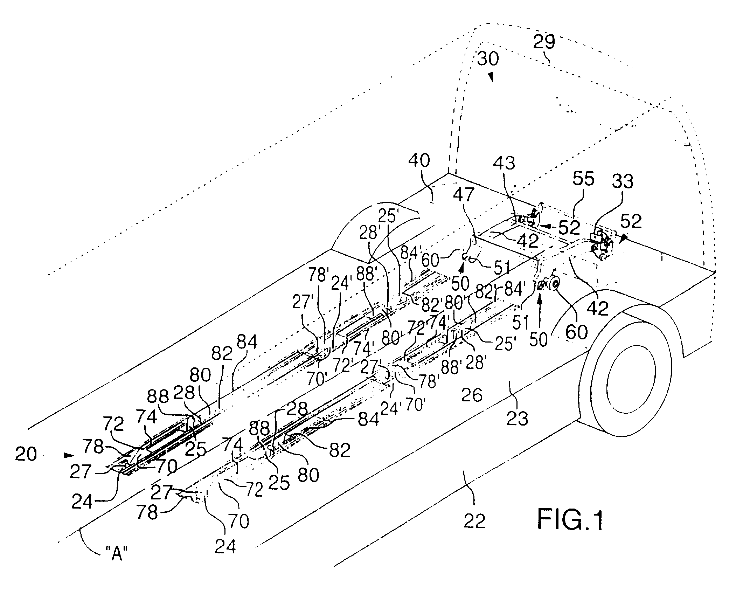

Referring now to Figures 1 through 13 of the drawings, there is shown a preferred embodiment of the vehicle seat system, as indicated by general reference numeral 20, according to the present invention, for use in a vehicle 22 including floor means 23 having upwardly facing surface means 26 covered by a conventional carpeting material.

The floor means 23 has a pair of front wells 24 and a pair of rear wells 25, disposed with respect to a longitudinal axis "A" (see Figure 1) of the vehicle 22. The front wells 24 and rear wells 25 extend below the upwardly facing surface means 26, and are formed as part of the floor means 23 of the vehicle 22. Front 27 and rear 28 anchor members extend across the front 24 and rear 25 wells, respectively, in a position below the upwardly facing surface means 26. The floor means 23 also has a second pair of front 24 and rear 25 wells disposed with respect to the longitudinal axis "A" of the vehicle 22, rearwardly from the first pair of front 24 and rear 25 wells. The second pairs of front 24 and rear 25 wells also extend below the upwardly facing surface means 26, and are formed as part of the floor means 23. Second front 27 and rear 28 anchor members, extend across the second front 24 and rear 25 wells, respectively, in a position below the upwardly facing surface means 26. The anchor members 27, 28 are preferably of substantially circular cross-section, and are secured in place by any conventional means, such as welding.

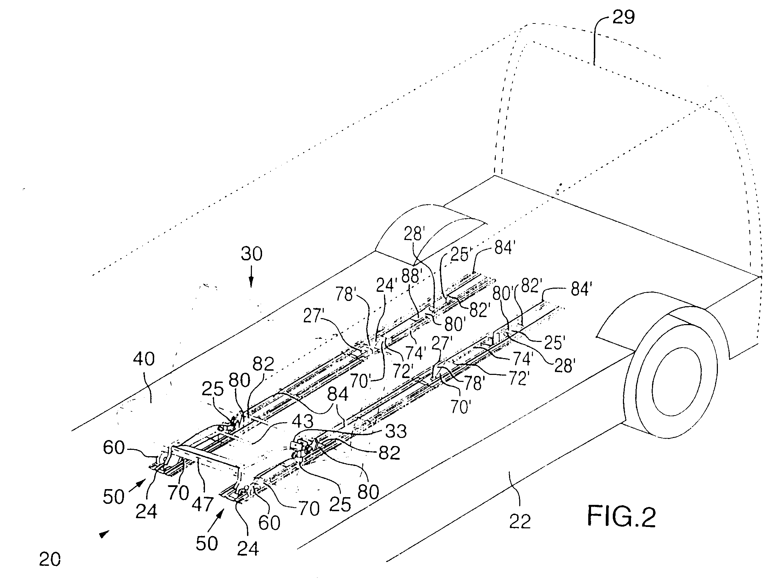

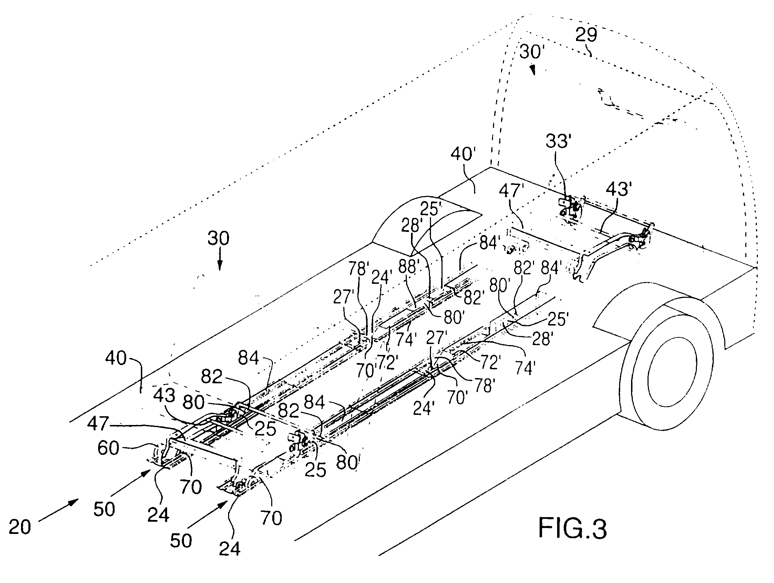

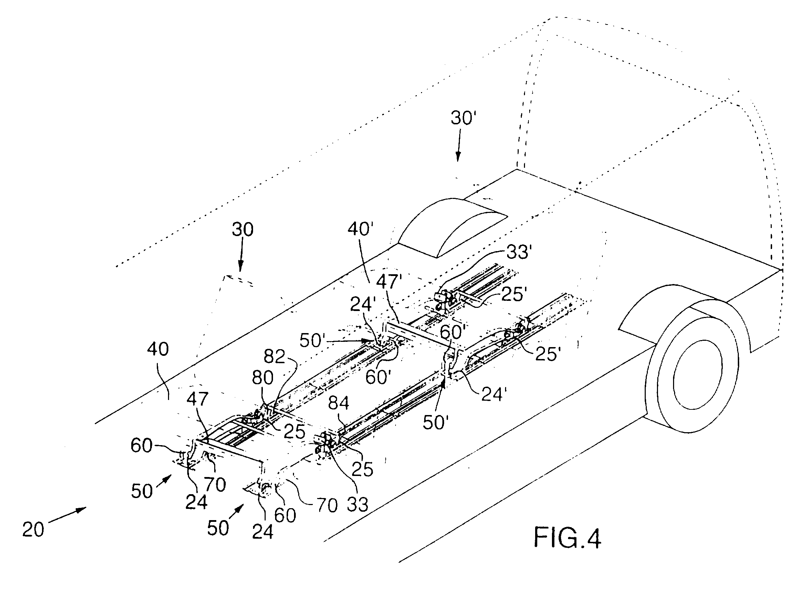

As can best be seen in Figures 1 through 4, a vehicle seat system according to the invention preferably comprises two seat assemblies which are both sequentially positioned behind the driver's front row seat structure (not shown). The first seat assembly is designated by general reference numeral 30, and is sometimes referred to in the art as a "second row" or "middle" seat structure, but will, for the sake of brevity and consistency, be referred to hereinafter as the "first seat assembly". Similarly, the second seat assembly is sometimes referred to in the art as the "third row" or "rear" seat assembly, but will hereinafter be referred to as the "second seat assembly" and is designated in the drawings appended hereto by the general reference numeral 30'. Both of the first 30 and second 30' seat assemblies are placed into and removed from the vehicle 22 through a rear door opening 29. The first seat assembly 30 is first placed into the vehicle 22 through the rear door opening 29, as can be best seen in Figure 1, and is then rolled into place so as to be received, in a manner more fully described below, by the first pair of front 24 and rear 25 wells, as can be best seen in Figure 2. The second vehicle seat assembly 30' is then placed into the vehicle 22 through the rear door opening 29, as can be best seen in Figure 3, and is similarly rolled into place so as to be received by the second pair of front 24' and rear 25' wells, as can be best seen in Figure 4.

The first seat assembly 30 and the second seat assembly 30' are substantially identical one to the other, although not necessarily so, except for a difference in the lateral placement thereon of wheel members, as will be discussed in greater detail subsequently. Accordingly, the structure of only the first seat assembly 30 will be described in detail, for the sake of brevity. It will, however, be readily understood by those skilled in the art that this description also applies to the second seat assembly 30', and analogous components mounted thereon, which analogous components will be designated in the Figures using like reference numerals distinguished by an apostrophe (') after the respective numeral.

The front seat assembly 30 comprises a first cushioned seat structure 40 and a first pair of rigid support structures 42 disposed adjacent laterally opposite ends of the first cushioned seat structure 40. The first pair of rigid support structures 42 are rigidly connected to each other in a conventional manner by means of front 47 and rear 43 cross-members. The first cushioned seat structure 40 is mounted atop the first pair of rigid support structures 42 in any suitable conventional manner, as is well known in the industry. In the preferred embodiment illustrated in the Figures, this mounting is accomplished by means of front 49 and a rear 48 cross-supports each rigidly affixed to the first cushioned seat structure 40 adjacent its underside. These cross-supports 49,48, which each extend laterally under substantially the full width of the first cushioned seat structure 40 are, in turn, conventionally bolted to upwardly directed front 35 and rear 33 receiving brackets, which brackets 35,33 are welded or otherwise operatively affixed to each of the rigid support structures 42 as shown.

Front connecting means, as indicated by general reference numeral 50, are designed for releasable, securing engagement with the respective ones of the front anchor members 27 upon entry of the front connecting means 50 into the front wells 24. More specifically, each front connecting means 50 comprises an open-ended slot 51 formed in the respective rigid support structure 42, for surrounding anchoring, engagement with the respective front anchor members 27, as will be discussed in greater detail subsequently. Such front connecting means are of conventional construction, and may be of the same general type shown in U.S. Patent No. 4,773,693.

Rear connecting means, as indicated by general reference numeral 52, are conventionally mounted on each of the rigid support structures 42, and are designed for releasable, securing engagement with the respective ones of the rear anchor members 28 upon entry of the rear connecting means 52 into the rear wells 25. More specifically, each of the rear connecting means 52 comprises a rear hook member 53 pivotally mounted on the associated rigid support structure 42, for releasable, securing engagement with the respective one of the rear anchor members 28 upon entry of the rear connecting means 52 into the associated rear well 25. The hook members 53 are connected together by a crossbar 55 secured in place by, for example, threaded fasteners, so as to thereby effect coincident and equivalent pivotal movement of the hook members 53. Respective torsion springs 57 bias the hook members 53 into latching engagement with the rear anchor members 28, unless otherwise removed from latching engagement by manual manipulation of the cross-bar 55. Again, the rear connecting means 52 shown may take any known operative form, including that disclosed in U.S. Patent No. 4,773,693, and are not to be restricted to the specific design shown herein.

Front 60 and rear 62 wheel members are mounted in freely rotatable relation on the outboard side of each of the first pair of rigid support structures 42, adjacent the respective front 50 and rear 52 connecting means so as to be in operative rolling contact with the upwardly facing surface means 26 of the vehicle 22 when the front 50 and rear 52 connecting means are removed from the respective front 24 and rear 25 wells. The front wheel members 60 are preferably of larger diameter than the rear wheel members 62, so as to pass over the rear wells 25 without falling thereinto, and are preferably constructed from a resiliently compressible rubberized material, for reasons as will be discussed subsequently.

A pair of front track means 70 is associated one each with the pair of front wells 24. The front track means 70 each extend forwardly and downwardly, from a respective track entry position 72 aft of the respective front well 24 and atop the upwardly facing surface, to a base area 21 of the respective front well 24, which base area 21 is positioned below the upwardly facing surface means 26. Each of the front track means 70 has a front track extension portion 74 extending horizontally, rearwardly atop the upwardly facing surface means 26 from its respective track entry position 72 toward the rear door opening 29 of the vehicle 22. The front track extension portion 74 associated with each of the front track means 70 preferably extends longitudinally rearwardly to a position adjoining the rear well 25 immediately behind the front well 24 associated with the front track extension portion 74. In this manner, the front track extension portion 74 provides a guided path for the respective front wheel members 60 upon forward rolling movement of the first cushioned seat structure 40 toward the front well 24.

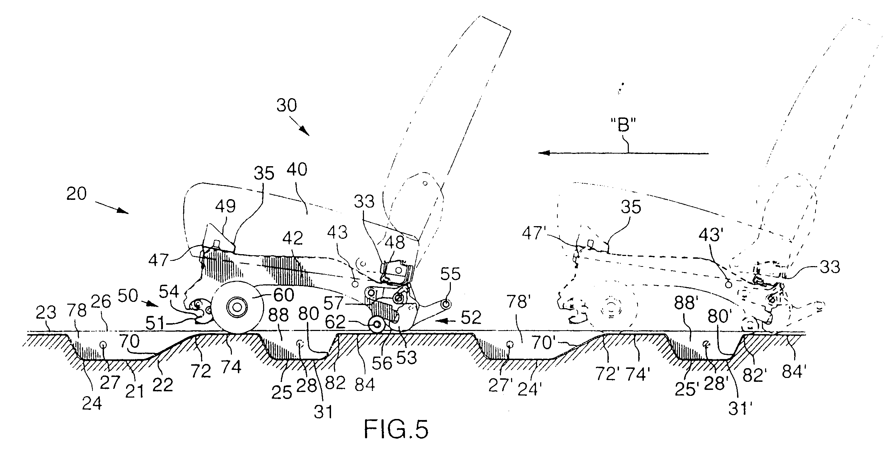

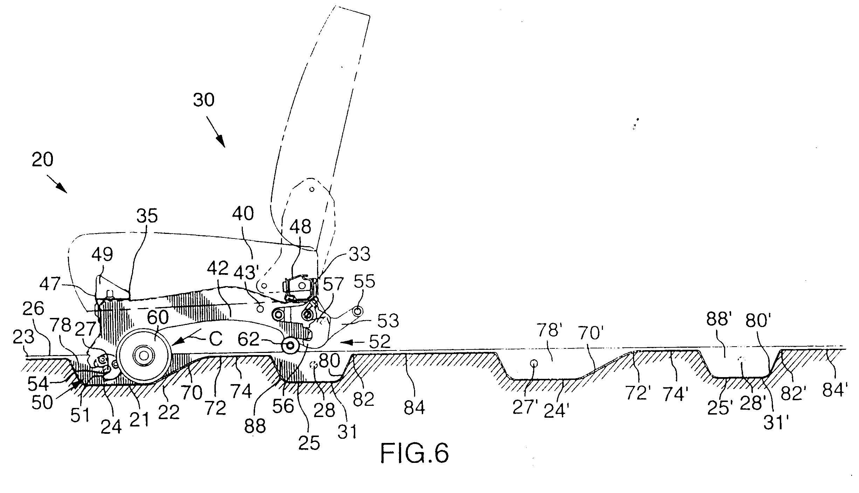

The front track means 70 are each positioned on the floor means 23 to accept, in guiding relation, a respective one of the front wheel members 60 upon forward rolling movement of the first cushioned seat structure 40, starting at a position as is best seen in Figure 5. The front track means 70 are shaped and dimensioned to thereafter guide each of the front wheel members 60, upon continued forward rolling movement, from the respective track entry position 72, as is best seen in Figure 5, to the base area 21 of the associated front well 24, as is best seen in Figure 6. Thereat the front connecting means 50 are permitted to each releasably, securely engage the respective ones of the front anchor members 27, thereby to releasably anchor the first cushioned seat structure 40 to the vehicle 22.

The open-ended slot 51 of each front connecting means 50 is preferably provided with an upwardly, rearwardly sloping cam surface 54 on the lower edge 53 of the slot 51, which cam surface 54 progressively engages the underside of the respective front anchor member 27 upon entry of the associated rigid support structure 42, into the base area 21 of the respective front well 24 as aforesaid. The open-ended slot 51 formed in the respective rigid support structure 42 thereby permits surrounding anchoring engagement with the respective front anchor members 27, when the front wheel members 60 are each positioned in the base areas 21 and 31 of the respective front 24 and rear 25 wells. When the cam surface 54 progressively engages the underside of the respective front anchor member 27 upon rolling entry of the associated rigid support member into the base area 21 of the respective front well 24 as aforesaid, the progressive engagement causes the front wheel members 60 to enter a state of resilient compression against the base area 21 of the front wells 24. Such resilient compression aids in subsequent lifting of the rear portion of the front 30 or rear 30' vehicle seat from the rear wells 25, when the rear connecting means 52 are disengaged from the rear anchor means 28.

The open ended slots 51 also permit upward, forward pivotal movement of the rigid support structures 42, and the attached cushioned seat structure 40, about the front anchor members 27 upon subsequent removal of the rear wheel members 62 from the rear wells 25 consequent upon upwardly, forwardly lifting of a rear portion of the first cushioned seat structure 40, as seen in Figure 6.

It can be seen that for removal of the vehicle seats, the open-ended slots 51 permit release of the front anchor members 27 from the surrounding, anchoring engagement throughout a selected range of the upward, forward pivotal movement of the rigid support structures 42 about the front anchor members 27. During this range of pivotal movement, the front wheel members 60 are positioned in operative rolling contact with the respective front track means 70 to allow each to roll upwardly and rearwardly along the respective front track means 70 to the track entry position 72. Thereafter, the front wheel members 60 are in operative rolling contact with the front track extension portions 74, and after passing over the rear wells 25, with the upwardly facing surface means 26 of the vehicle 22, thereby to permit subsequent rearwardly rolling removal of the first cushioned seat structure 40 from the rear door opening 29 in the vehicle 22.

A pair of rear entry positions 82 is associated one each with the pair of rear wells 25, such that the rear wells 25 are each disposed forwardly from the respective rear entry position 82. The rear entry positions 82 are each positioned on the floor means 23 to accept, in downwardly though passing relation, a respective one of the rear wheel members 62 upon forward rolling movement of the first cushioned seat structure 40 to the respective rear entry positions 82. The rear entry positions 82 are also each positioned to thereafter permit entry of each of the rear wheel members 62 into the respective rear well 25, upon continued forward rolling movement, from the respective rear entry position 82 to the base area 31 of the associated rear well 25. The rear connecting means 52 are thereat permitted to each releasably, securely engage the respective ones of the rear anchor members 28, thereby to releasably anchor the rear portions of the rigid support structures 42 and the first cushioned seat structure 40 attached thereto to the vehicle 22.

In the preferred embodiment shown, a pair of rear track means 80 is associated one each with the pair of rear wells 25. The rear track means 80 extend forwardly and downwardly (more steeply than the front track means 70) from the respective rear entry position 82 positioned aft of the respective rear well 25, and atop the upwardly facing surface, to a base area 31 of the respective rear well 25 positioned below the upwardly facing surface means 26. The rear track means 80 are each positioned on the floor means 23 to accept, in guiding relation, a respective one of the rear wheel members 62 upon forward rolling movement of the first cushioned seat structure 40 from the respective rear entry position 82. The rear track means 80 are also each shaped and dimensioned to thereafter guide each of the rear wheel members 62, upon continued forward rolling movement, from the respective rear entry position 82 to the base area 31 of the associated rear well 25, and to thereat permit the rear connecting means 52 to each releasably, securely engage the respective ones of the rear anchor members 28, thereby to releasably anchor the first cushioned seat structure 40 to the vehicle 22.

Each of the rear track means 80 also has a rear track extension portion 84 extending longitudinally rearwardly atop the upwardly facing surface means 26 from its associated rear entry position 82 toward the rear door opening 29 of the vehicle 22. The rear track extension portions 74 provide a guided path for the respective rear wheel members 62 upon forward rolling movement of the first cushioned seat structure 40 toward the rear well 25.

The front track extension portion 74 and the rear track extension portion 84 are longitudinally aligned with one another. Accordingly, the front 60 and rear 62 wheel members mounted on each separate side of the vehicle seat each pass over both the respective front track extension portion 74 and respective rear track extension portion 84. In order to preclude the front wheel members 60 from falling into the portion of the rear well 25 disposed between the front track extension portion 74 and the rear track extension portion 84, the longitudinal distance between the front track extension portions 74 and the rear track extension portions 84 is less than the diameter of the front wheel members 60, but greater than the diameter of the rear wheel members 62, so as to permit the front wheel members 60 to roll over the rear wells 25 upon forward rolling of the first cushioned seat structure 40 toward the respective track entry position 72 associated with the respective one of the front wells 24.

As can be best seen in Figures 1 through 4, the front wheel members 60 and the rear wheel members 62 are each preferably mounted on the outboard side of the first pair of rigid support structures 42, in laterally spaced relation from the respective rigid support structure 42, and in equal laterally spaced relation to the front track means 70, the front track extension portions 74, the rear track means 80, and the rear track extension portions 84.

As can be best seen in Figure 5 - 12, each of the front wheel members 60 is mounted as aforesaid on the outboard side of the respective first rigid support structures 42 in such a manner that the front wheel members 60 are each in longitudinally spaced relation from the corresponding rear wheel member 62, which longitudinally spaced relation, it will be noted, is also equal to the laterally spaced relation of the front 24 and rear 25 wells which respectively accommodate the front 60 and rear 62 wheel members.

In the preferred embodiment shown, the front track means 70, the front track extension portions 74, the rear track means 80 and the rear track extension portions 84 are formed, together with a front well liner 78, and a rear well liner 88, as a unitary molded piece, from a plastics material.

As discussed above, the vehicle seat system 20 of the preferred embodiment of the present invention also comprises a second vehicle seat 30' substantially identical to the first vehcicle seat 30, and having a second cushioned seat structure 40', a second pair of rigid support structures 42', second front connecting means 50', second rear connecting means 52', second front 60' and rear 62' wheel members, a second pair of front track means 70' and respective second track entry positions 72', a second front track extension portion 74', a second front well liner 78', a second pair of rear track means 80' and respective second rear entry positions 82', a second rear track extension portion 84', and a second rear well liner 88'.

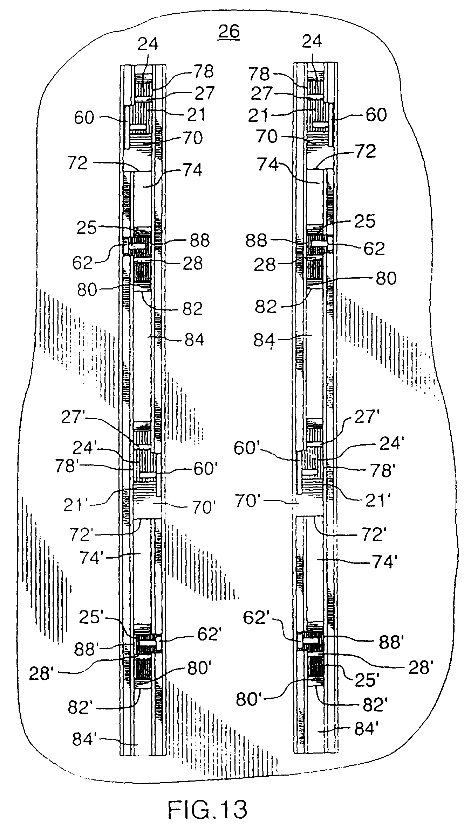

As can best be seen in Figure 13, the second pair of rigid support structures 42', are laterally spaced from one another a distance substantially equal to the lateral spacing between the first pair of rigid support members. Further, the front wheel members 60' and the second rear wheel members 62' are each mounted on the **inboard** side of the pair of second rigid support structures 42' in laterally spaced relation equal to the laterally spaced relation of the second front track means 70', the second front track extension portions 74', the second rear track means 80' and the second rear track extension portions 84', such that the second front wheel members 60' and the second rear wheel members 62' will operatively align themselves **only** with the second front track means 70' and the second rear track means 80' for rolling movement as aforesaid into the respective ones of the second front 24' and the second rear 25' wells. The inboard second pair of front 60' and rear 62' wheel members therefore cannot enter the first pair of front 24 and rear 25 wells, and the outboard first pair of front 60 and rear 62 wheel members therefore cannot enter the second pair of front 24' and rear 25' wells. In this manner, the first seat assembly 30 will not engage at the position of the second seat assembly 30', but will roll there past to its proper position, and the second seat assembly 30' will not engage at the position of the first seat assembly 30, but can be readily returned to its proper position, in the event that it initially rolls past its proper position. This is especially important if design considerations, such as seat belt anchoring points or loading for the first seat assembly 30 are different than for the second seat assembly 30'.

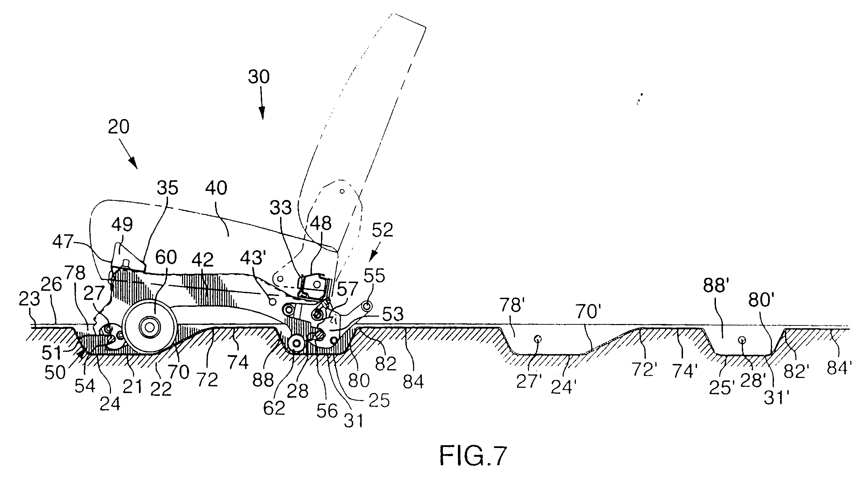

In use, the vehicle seat system 20 of the present invention functions in the following manner, as will now be described with reference to Figures 5 through 12, which Figures show the installation of the front 30 and rear 30' seat assemblies into the vehicle 22 and their subsequent removal therefrom. The first vehicle seat assembly 30 is first lifted into the vehicle 22 through the rear door opening 29, and is then rolled past the second front 24 and rear 25 wells for the second vehicle seat 30', as is shown in ghost outline in Figure 5. It is then rolled toward the first front 24 and rear 25 wells, as is indicated by arrow "B" in Figure 5, until the front wheel members 60 each reach their respective track entry positions 72. Upon continued forward rolling movement of the first seat assembly 30, the front wheel members 60 roll down along the front track means 70, as is indicated by arrow "C" in Figure 6, until the front wheel members 60 reach the base area 21 of the respective front well 24. Thereat, the front connecting means 50 are permitted to each releasably, securely engage the respective ones of the front anchor members 27. The rear portion of the first seat assembly 30 is then lowered by a user onto the rear anchor members 28, whereat sloped contact portions 56 on the hook members 53 slidingly contact the rear anchor members 28 so as to rotate the hook members 53 against the torsion springs 57, thus permitting the hook members 53 to advance around the rear anchor members 28. The hook members 53 then surroundingly engage the respective rear anchor members 28, thereby to releasably anchor the first seat assembly 30 to the vehicle 22, as can be best seen in Figure 7.

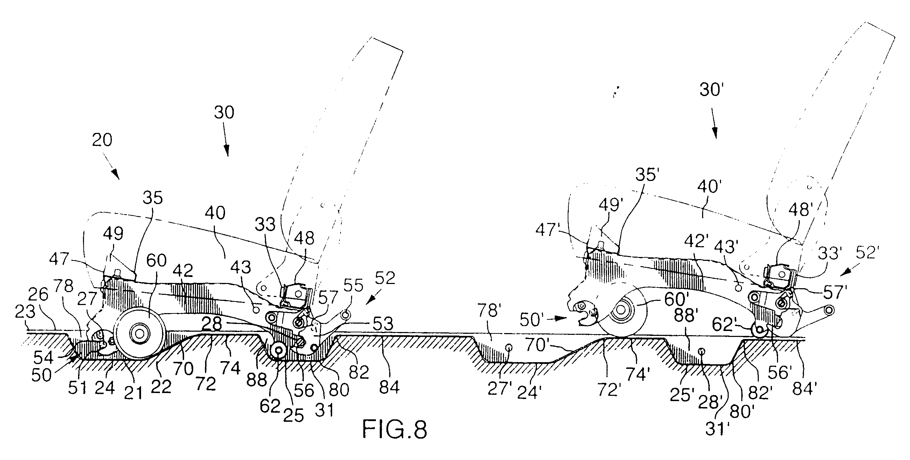

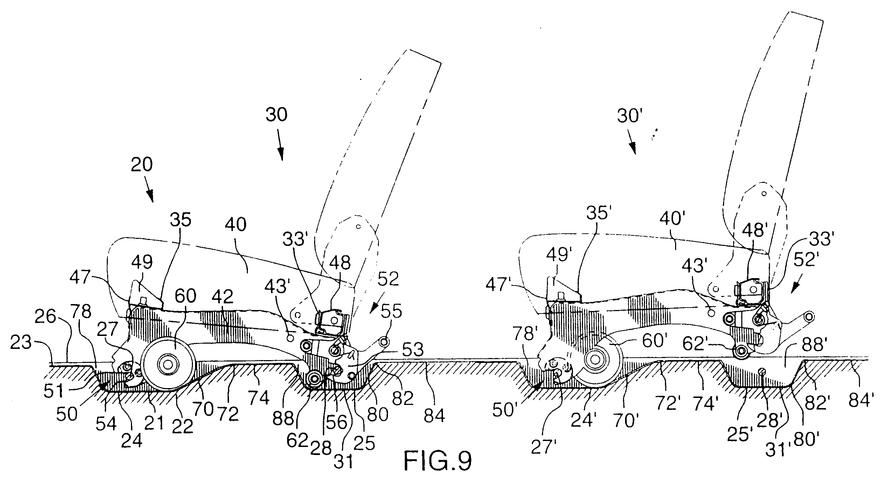

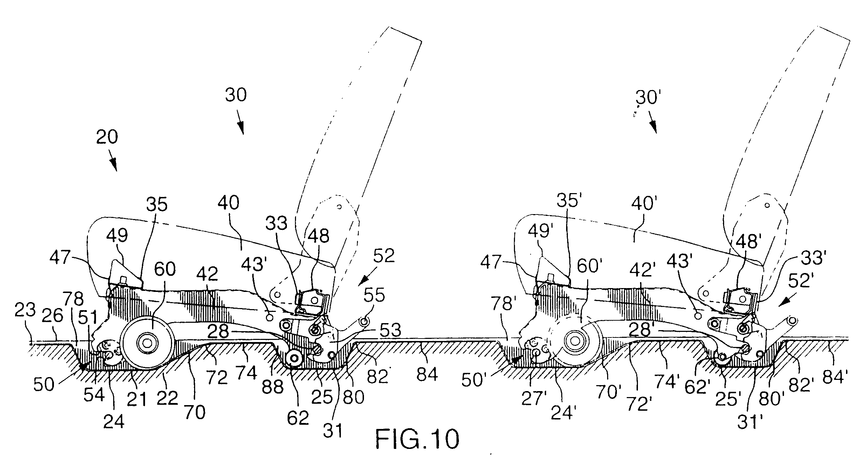

The second seat assembly 30' is then lifted into the vehicle 22 through the rear door opening 29, and rolled into place, as can be best seen in Figure 8, in a manner analogous to the first seat assembly 30. Upon continued forward rolling movement of the second seat assembly 30', the front wheel members 60' each roll down along the front track means 70', until the front wheel members 60' reach the base area 21' of the respective front well 24', as can be best seen in Figure 9. The rear portion of the second seat assembly 30' is then lowered onto the rear anchor members 28', thus permitting the hook members 53' to advance around the rear anchor members 28', and surroundingly engage the respective rear anchor members 28', thereby to releasably anchor the second vehicle seat 30' to the vehicle 22, as can be best seen in Figure 10.

The front wheel members 60 are preferably made from a resiliently compressible rubberized material, and, because of their relatively larger size, are retained in the state of resilient compression by the releasable securing engagement of the rear anchor members 28 by the rear hook members 53.

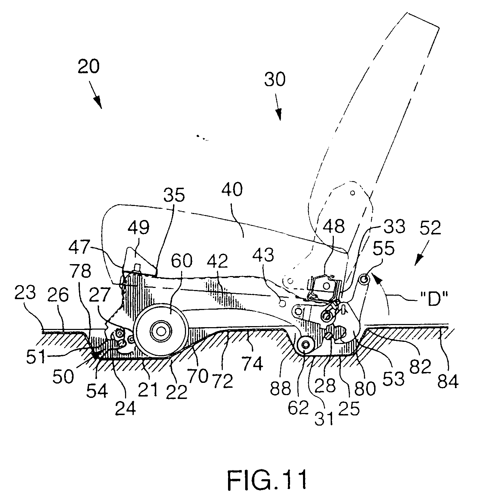

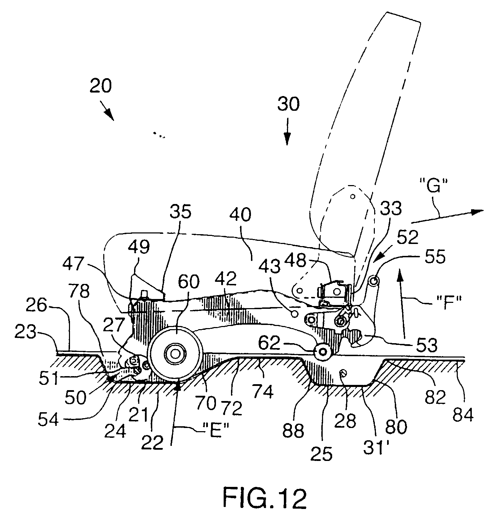

In order to remove the first seat assembly 30 from the vehicle 22, a crossbar 55, which connects the two rear connecting members 52 to each other, is lifted by the user, as indicated by arrow "D" in Figure 11. This causes release of the rear anchor members 28 by the rear hook members 53, which in turn causes the front wheel members 60 to be released from the aforementioned state of resilient compression, as indicated by arrow "E" in Figure 12, thereby assisting a user to effect the upward, forward pivotal movement of the rigid support structures 42, and the attached first cushioned seat structure 40 about the front anchor members 27, as indicated by arrow "F" in Figure 12. The first seat assembly 30 can then be rolled rearwardly, as indicated by arrow "G" in Figure 12, toward the rear door opening 29. An analogous releasing technique is utilized with respect to the second seat assembly 30'.

## Claims

1. A vehicle seat system for use with a vehicle including floor means (23) having upwardly facing surface means (26), said floor means (23) having a pair of front wells (24) and a pair of rear wells (25), disposed with respect to a longitudinal axis (A) of the vehicle (22), extending below said upwardly facing surface means (26), and front (27) and rear (28) anchor members extending across said front (24) and rear (25) wells, respectively, in a position below said upwardly facing surface means (26), said vehicle seat system including a first cushioned seat structure (40), a first pair of rigid support structures (42) disposed adjacent laterally opposite ends of said first cushioned seat structure (40), with said first cushioned seat structure (40) mounted on said first pair of rigid support structures (42), front connecting means (50) on each of said rigid support structures (42) for releasable, securing engagement with the respective ones of said front anchor members (27) upon entry of said front connecting means (50) into said front wells (24), rear connecting means (52) on each of said rigid support structures (42) for releasable, securing engagement with the respective ones of said rear anchor members (28) upon entry of said rear connecting means (52) into said rear wells (25), front (60) and rear (62) wheel members mounted on each of said first pair of rigid support structures (42) adjacent the respective front (50) and rear (52) connecting members so as to be in operative rolling contact with the upwardly facing surface means (26) of the vehicle (22) when said front (50) and rear (52) connecting means are removed from the respective front (24) and rear (25) wells, **characterized in that** each of said pair of front wells (24) is associated with a pair of front track means (70), said front track means (70) each extending forwardly and downwardly, from a respective track entry position aft of the respective front well (24) and atop said upwardly facing surface means (26), to a base area of the respective front well (24) positioned below said upwardly facing surface means (26);
each of said pair of rear wells (24) is associated with a pair of rear entry positions (82), such that said rear wells (25) are each disposed forwardly from the respective rear entry position (82);
said front track means (70) each being positioned on the floor means (23) to accept, in guiding relation, a respective one of said front wheel members (60) upon forward rolling movement of said first cushioned seat structure (40) and being shaped and dimensioned to thereafter guide each of said front wheel members (60), upon continued forward rolling movement, from the respective track entry position (72) to the base area (21) of the associated front well (24), and to thereat permit said front connecting means (50) to each releasably, securely engage the respective ones of said front anchor members (27), thereby to releasably anchor the first cushioned seat structure (40) to said vehicle (22); and,
said rear entry positions (82) each being positioned on the floor means (23) to accept, in downwardly through passing relation, a respective one of said rear wheel members (62) upon forward rolling movement of said first cushioned seat structure (40) and thereafter to permit entry of each of said rear wheel members (62) into the respective rear well (25), upon continued forward rolling movement, from the respective rear entry position (82) to the base area (31) of the associated rear well (24), and to thereat permit said rear connecting means (52) to each releasably, securely engage the respective ones of said rear anchor members (28), thereby to releasably anchor the first cushioned seat structure (40) to said vehicle (22).

2. A vehicle seat system according to claim 1, **characterized** in further comprising a pair of rear track means (80) associated one each with said pair of rear wells (25), said rear track means (80) extending forwardly and downwardly, from said respective rear entry position (82) aft of the respective rear well (24) and atop said upwardly facing surface, to a base area (31) of the respective rear well (25) positioned below said upwardly facing surface means (26), with said rear track means (80) each being positioned on the floor means (23) to accept, in guiding relation, a respective one of said rear wheel members (62) upon forward rolling movement of said first cushioned seat structure (40) and being shaped and dimensioned to thereafter guide each of said rear wheel members (62), upon continued forward rolling movement, from the respective track entry position (82) to the base area (31) of the associated rear well (25), and to thereat permit said rear connecting means (52) to each releasably, securely engage the respective ones of said rear anchor members (28), thereby to releasably anchor the first cushioned seat structure (40) to said vehicle.

3. A vehicle seat system according to claim 2, **characterized in that** said front anchor members (27) are of substantially circular cross-section and the front connecting means (50) each comprise an open-ended slot (51) formed in the respective rigid support structure for surrounding anchoring, engagement with the respective front anchor members (27) when said front wheel members (60) are each positioned in the base area (21, 31) of the respective front and rear wells (24, 25), and so as to permit upward, forward pivotal movement of the rigid support structures and the attached cushioned seat structure (40) about said front anchor members (27) extending across the front wells (24) upon removal of the rear wheel members (62) from the rear wells (25) consequent upon upwardly, forwardly lifting of a rear portion of said first cushioned seat structure (40).

4. A vehicle seat system according to claim 3, **characterized in that** said open-ended slot (51) permits release of said front anchor members (27) from said surrounding, anchoring, engagement throughout a selected range of said upward, forward pivotal movement of said rigid support structures about the front anchor members (27), during which range of pivotal movement said front wheel members (60) are positioned in operative rolling contact with the respective front track means (70) to allow each to roll upwardly and rearwardly along the respective front track means (70) to said track entry position (72), and thereafter, into said operative rolling contact with said upwardly facing surface means (26) of the vehicle (22), thereby to permit subsequent rearwardly rolling removal of the first cushioned seat structure (40) from a rear opening in the vehicle (22).

5. A vehicle seat system according to claim 4, **characterized in that** each of said rear connecting means (52) comprises a rear hook member (53) pivotally mounted on the associated rigid support structure for releasable, securing, engagement with the respective one of said rear anchor members (28) upon entry of the rear connecting means (52) into said associated rear well (24).

6. A vehicle seat system according to claim 5, **characterized in that** said front wheel members (60) are of larger diameter than said rear wheel members (62), and are constructed from a resiliently compressible rubberized material.

7. A vehicle seat system according to claim 6, **characterized in that** the open-ended slot (51) of each front connecting means (50) is provided with an upwardly, rearwardly sloping cam surface (54) on the lower edge of said slot (51), which cam surface (54) progressively engages the underside of the respective front anchor member (27) upon rolling entry of the associated rigid support structure into the base area (21) of the respective front well (24) as aforesaid, said progressive engagement causing said front wheel members (60) to enter a state of resilient compression against the base area (21) of the front wells (24).

8. A vehicle seat system according to claim 7, **characterized in that** the front wheel members (60) are retained in said state of resilient compression by said releasable securing engagement of the rear anchor members (28) by said rear hook members (53).

9. A vehicle seat system according to claim 8, **characterized in that** the release of the rear anchor members (28) by the rear hook members (53) causes said front wheel members (60) to be released from said state of resilient compression, thereby assisting a user to effect said upward, forward pivotal movement of the rigid support structures and the attached first cushioned seat structure (40) about said front anchor members (27).

10. A vehicle seat system according to claim 9, **characterized in that** said hook members (53) are biased toward said latching engagement with said rear anchor members (28).

11. A vehicle seat system according to claim 9, **characterized in that** each of said front track means (70) has a front track extension portion (74) extending horizontally, rearwardly atop said upwardly facing surface means (26) from its track entry (72) position toward said rear opening of the vehicle (22).

12. A vehicle seat system according to claim 11, **characterized in that** the front track extension (74) portion associated with each of the front track means (70) extends longitudinally rearwardly to a position adjoining the rear well (25) immediately behind the front well (24) associated with said front track extension portion (74).

13. A vehicle seat system according to claim 12, **characterized in that** each of said rear track means (80) has a rear track extension portion (84) extending longitudinally rearwardly atop said upwardly facing surface means (26) from its associated track entry position (82) toward said rear opening of the vehicle (22).

14. A vehicle seat system according to claim 13, **characterized in that** said front track means (70), said front track extension portions (74), said rear track means (80) and said rear track extension portions (84) are formed, together with a front and a rear well liner, from a plastics material.

15. A vehicle seat system according to claim 14, **characterized in that** the longitudinal distance between the front track extension portions (74) and the rear track extension portions (84) is less than the diameter of the front wheel members (60), but greater than the diameter of the rear wheel members (62), so as to permit said front wheel members (60) to roll over said rear wells (25) upon forward rolling of the first cushioned seat structure (40) toward the respective track entry position (72) associated with the respective one of said front wells (25).

16. A vehicle seat system according to claim 15, **characterized in that** said front wheel members (60) and said rear wheel members (62) are each mounted on the outboard side of said first pair of rigid support structures in laterally spaced relation equal to the laterally spaced relation of said front track means (70), said front track extension portions (74), said rear track means (80) and said rear track extension portions (84).

17. A vehicle seat system according to claim 16, **characterized in that** said floor means (23) has a second pair of front (24') and rear wells (25') disposed with respect to the longitudinal axis of the vehicle (22) rearwardly from said first pair of front (24) and rear wells (25), extending below said upwardly facing surface means (26), and second front (27') and rear (28') anchor members extending across said second front (24') and rear (25') wells, respectively, in a position below said upwardly facing surface means (26), said vehicle seat system additionally comprising:
a second cushioned seat structure (40');
a second pair of rigid support structures (42') disposed adjacent laterally opposite ends of said cushioned seat structure (40'), with said second cushioned seat structure (40') mounted on said second pair of rigid support structures;
second front connecting means (50') on each of said second rigid support structures for releasable, securing engagement with the respective ones of said second front anchor members (27') upon entry of said second front connecting means (50') into said second front wells (24');
second rear connecting means (52') on each of said second rigid support structures for releasable, securing engagement with the respective ones of said second rear anchor members (28') upon entry of said second rear connecting means into said second rear wells (25');
second front (60') and rear (62') wheel members mounted on each of said second pair of rigid support structures adjacent the respective second front (50') and rear (52') connecting members so as to be in operative rolling contact with the upwardly facing surface means (26) of the vehicle when said second front (50') and rear (52') connecting means are removed from the respective second front (24') and rear wells (25');
a pair of second front track means (70') associated one each with said second pair of front wells (24'), said second front track means (70') each extending forwardly and downwardly, from a respective second track entry position (72') aft of the respective second front well (24') and atop said upwardly facing surface means (26), to a base area (21') of the respective second front well (24') positioned below said upwardly facing surface means (26);
a pair of second rear entry positions (82') associated one each with said pair of second rear wells (25'), such that said second rear wells (25') are each disposed forwardly from each respective second rear entry position (82');
said second front track means (70') each being positioned on the floor means (23) to accept, in guiding relation, a respective one of said second front wheel members (60') upon forward rolling movement of said second cushioned seat structure (40') and being shaped and dimensioned to thereafter guide each of said second front wheel members (60'), upon continued forward rolling movement, from the respective second track entry (72') position to the base area (21') of the associated second front well (24'), and to thereat permit said second front connecting means (50') to each releasably, securely engage the respective ones of said second front anchor members (27'), thereby to releasably anchor the second cushioned seat structure (40') to said vehicle (22); and,
said second rear entry positions (82') each being positioned on the floor means (23) to accept, in downwardly through passing relation, a respective one of said second rear wheel members (62') upon forward rolling movement of said second cushioned seat structure (40') and thereafter to permit entry of each of said second rear wheel members (62') into the respective second rear well (25'), upon continued forward rolling movement, from the respective second rear entry position (82') to the base area (32') of the associated second rear well (25'), and to thereat permit said second rear connecting means (52') to each releasably, securely engage the respective ones of said second rear anchor members (28'), thereby to releasably anchor the second cushioned seat structure (40') to said vehicle (22).

18. A vehicle seat system according to claim 17, **characterized in that** each of said second front track means (70') has a front track extension portion (74') extending horizontally, rearwardly atop said upwardly facing surface means (26) from its respective second track entry position (72') toward said rear opening of the vehicle (22).

19. A vehicle seat system according to claim 18, **characterized in that** the second front track extension (74') portion associated with each of said second front track means (70') extends longitudinally rearwardly to a position adjoining the rear well immediately behind the second front well (24') associated with said second front track extension portion (74').

20. A vehicle seat system according to claim 19, **characterized in that** each of said second rear track (80') means has a second rear track extension portion (84') extending longitudinally rearwardly atop said upwardly facing surface means (26) from its associated second track entry position (82') toward said rear opening of the vehicle (22).

21. A vehicle seat system according to claim 20**, characterized in that** said second front track means (70'), said second front track extension portions (74'), said second rear track means (80') and said second rear track extension portions (84') are formed, together with a second front and a second rear well liner, from a plastics material.

22. A vehicle seat system according to claim 21, **characterized in that** said second front wheel members (60') are of larger diameter than said second rear wheel members (62'), and are constructed from a resiliently compressible rubberized material.

23. A vehicle seat system according to claim 22, **characterized in that** the second front track extension portion (74') and the second rear track extension portions (84') are longitudinally aligned with one another and the longitudinal distance between the second front track extension portions (74') and the second rear track extension portions (84') is less than the diameter of the front wheel members (60'), but greater than the diameter of the second front wheel members (62'), so as to permit said second front wheel members (60') to roll over said second rear wells (24') upon forward rolling of the second cushioned seat structure (40') toward the respective second track entry position (72') associated with the respective one of said second front wells (24').

24. A vehicle seat system according to claim 23, wherein said second pair of rigid support structures are laterally spaced from one another a distance substantially equal to the lateral spacing between said first pair of rigid support structures, and wherein said front wheel members and said second rear wheel members are each mounted on the inboard side of said pair of second rigid support structures in laterally spaced relation equal to the laterally spaced relation of said second front track means, said second front track extension portions, said second rear track means and said second rear track extension portions, such that said second front wheel members and said second rear wheel members will operatively align themselves only with said second front track means and said second rear track means for rolling movement as aforesaid into the respective ones of said second front and said second rear wells.

## Patentansprüche

1. Fahrzeugsitzsystem zur Verwendung in einem Fahrzeug, das eine Bodeneinrichtung (23) mit einer nach oben gerichteten Oberflächeneinrichtung (26) aufweist, wobei die Bodeneinrichtung (23) ein Paar von vorderen Vertiefungen (24) und ein Paar von hinteren Vertiefungen (25) aufweist, die in bezug auf die Längsachse (A) des Fahrzeuges (22) angeordnet sind, die sich entlang der nach oben weisenden Oberflächeneinrichtung (26) erstreckt, und vordere (27) und hintere (28) Verankerungsteile aufweist, die sich über die vordere (24) und hintere (25) Vertiefungen respektive in einer Position unterhalb der nach oben gerichteten Oberflächeneinrichtung (26) erstrecken, wobei das Fahrzeugsitzsystem umfaßt eine erste gepolsterte Sitzstruktur (40), ein erstes Paar starrer Rahmenstrukturen (42), die neben seitlich einander gegenüberliegenden Enden der ersten gepolsterten Sitzstruktur (40) angeordnet sind, wobei die erste gepolsterte Sitzstruktur (40) auf dem ersten Paar starrer Rahmenstrukturen (42) montiert ist, vordere Verbindungseinrichtungen (50) an jeder der starren Rahmenstrukturen (42) zum lösbaren, abgesicherten Eingreifen mit dem entsprechenden der vorderen Verankerungsteile (27) bei Eintritt in die vorderen Verbindungseinrichtungen (50) in die vorderen Vertiefungen (24), hintere Verbindungseinrichtungen (52) auf jeder der starren Rahmenstrukturen (42) zum lösbaren, abgesicherten Eingriff mit den entsprechenden der hinteren Verankerungsteile (28) beim Eintritt der hinteren Verbindungseinrichtungen (52) in die hinteren Vertiefungen (25), vordere (60) und hintere (62) Radelemente, die auf jeder des ersten Paares der starren Rahmenstrukturen (42) neben den entsprechenden vorderen (50) und hinteren (52) Verbindungsteilen montiert sind, so daß sie in wirksamem Rollkontakt mit der nach oben weisenden Oberflächeneinrichtung (26) des Fahrzeuges (22) sind, wenn die vorderen (50) und hinteren (52) Verbindungselemente von den entsprechenden vorderen (24) und hinteren (25) Vertiefungen entfernt werden, **dadurch gekennzeichnet**, daß jede Vertiefung des Paares der vorderen Vertiefungen (24) mit einem Paar von vorderen Spureinrichtungen (70) zugeordnet ist, wobei die vorderen Spureinrichtungen (70) von einer entsprechenden Spureintrittsposition hinter der entsprechenden vorderen Vertiefung (24) und oberhalb der nach oben weisenden Oberflächeneinrichtung (26) nach vorne und unten erstrecken zu einem Basisbereich der entsprechenden vorderen Vertiefung (24), der unterhalb der nach oben gerichteten Oberflächeneinrichtung (26) angeordnet ist;
jede Vertiefung des Paares von hinteren Vertiefungen (25) einem Paar von hinteren Eintrittspositionen (82) zugeordnet ist, so daß die hinteren Vertiefungen (25) jeweils vor der entsprechenden hinteren Eintrittsposition (82) angeordnet sind;
daß die vorderen Spureinrichtungen (70) jeweils auf der Bodeneinrichtung (23) angeordnet sind, so daß sie als Führung eine der vorderen Radelemente (60) aufnehmen bei einer nach vorne gerichteten Rollbewegung der ersten gepolsterten Sitzstruktur (40), wobei sie so geformt und dimensioniert sind, daß sie danach jedes der vorderen Radelemente (70) bei einer fortgesetzten Rollbewegung nach vorne von der entsprechenden Spureintrittsposition (72) zu dem Basisbereich (21) der zugehörigen vorderen Vertiefung (24) zu führen, und um es dort zu gestatten, daß die vorderen Verbindungseinrichtungen (50) jeweils sicher an dem entsprechenden der vorderen Ankerelemente (27) lösbar angreifen, so daß die erste gepolsterte Sitzstruktur (40) lösbar an dem Fahrzeug (22) verankert wird; und daß
die hinteren Eintrittspositionnen (82) jeweils auf der Bodeneinrichtung (23) positioniert sind, um ein entsprechendes der hinteren Radelemente (62) bei einer vorwärtsgerichteten Rollbewegung der ersten gepolsterten Sitzstruktur (40) nach unten und durchgehend aufzunehmen, und um es danach zu ermöglichen, daß jedes der hinteren Radelemente (62) in die entsprechende hintere Vertiefung (25) bei einer fortgesetzten, nach vorne gerichteten Rollbewegung von der entsprechenden hinteren Eintrittsposition (82) zu dem Basisbereich der zugehörigen hinteren Vertiefung (24) eintritt, und um es dort zu ermöglichen, daß die hinteren Verbindungseinrichtungen (52) sicher an den entsprechenden der hinteren Ankerelemente (28) lösbar angreift, so daß die erste gepolsterte Sitzstruktur (40) lösbar an dem Fahrzeug (22) verankert wird.

2. Fahrzeugsitzsystem nach Anspruch 1, ferner **gekennzeichnet durch** ein Paar von hinteren Spureinrichtungen (80), die jeweils einzeln dem Paar der hinteren Vertiefungen (25) zugeordnet ist, wobei sich die hinteren Spureinrichtungen (80) nach vorne und unten erstrecken, von der entsprechenden hinteren Eintrittsposition (82) hinter der entsprechenden hinteren Vertiefung (24) und oberhalb der nach oben weisenden Oberfläche bis zu einem Basisbereich (31) der entsprechenden hinteren Vertiefung (25), der unterhalb der nach oben weisenden Oberflächeneinrichtung (26) angeordnet ist, wobei die hinteren Spureinrichtungen (80) jeweils auf der Bodeneinrichtung (23) angeordnet sind, derart, daß sie als Führung ein entsprechendes der hinteren Radelemente (62) bei einer nach vorne gerichteten Rollbewegung der ersten gepolsterten Sitzstruktur (40) aufnimmt, und wobei sie so geformt und dimensioniert ist, daß sie danach jedes der hinteren Radelemente (62) bei einer fortgesetzten, nach vorne gerichteten Rollbewegung von der entsprechenden Spureintrittsposition (82) zu einem Basisbereich (31) der zugeordneten hinteren Vertiefung (25) führt, und daß sie dort ermöglicht, daß die hinteren Verbindungseinrichtungen (52) jeweils sicher an den entsprechenden der hinteren Ankerelemente (28) lösbar angreifen, so daß die erste gepolsterte Sitzstruktur (40) lösbar an dem Fahrzeug verankert wird.

3. Fahrzeugsitzsystem nach Anspruch 2, **dadurch gekennzeichnet**, daß die vorderen Ankerelemente (27) einen im wesentlichen kreisförmigen Querschnitt aufweisen, und daß die vorderen Verbindungseinrichtungen (50) jeweils einen Schlitz (51) mit offenem Ende aufweisen, der in der entsprechenden starren Rahmenstruktur ausgebildet ist, um die entsprechenden vorderen Ankerelemente (27) zu umgeben und an diesen anzugreifen, wenn die vorderen Radelemente (60) in dem Basisbereich (21, 31) der entsprechenden vorderen und hinteren Vertiefungen (24, 25) positioniert sind, und um eine nach oben und vorne gerichtete Schwenkbewegung der starren Rahmenstrukturen und der daran befestigten, gepolsterten Sitzstrukturen (40) um die vorderen Ankerelemente (27) zu ermöglichen, die sich über die vorderen Vertiefungen (24) erstrecken, wenn die hinteren Radelemente (62) aus den hinteren Vertiefungen (25) entfernt werden als Folge davon, daß ein hinterer Teil der ersten gepolsterten Sitzstruktur (40) nach oben und vorne angehoben wird.

4. Fahrzeugsitzsystem nach Anspruch 3, dadurch gekennzeichnet, daß der Schlitz (51) mit offenem Ende ein Lösen der vorderen Ankerelemente (27) aus dem umgebenden, verankernden Eingriff über einem ausgewählten Bereich der nach oben und vorne gerichteten Schwenkbewegung der starren Rahmenstrukturen um die vorderen Ankerelemente (27) ermöglicht, wobei in diesem Bereich der Schwenkbewegung die vorderen Radelemente (60) in Rollkontakt mit den entsprechenden vorderen Spureinrichtungen (70) positioniert sind, um zu ermöglichen, daß jedes derselben nach oben und hinten entlang der entsprechenden vorderen Spureinrichtung (70) zu der Spureintrittsposition (72) rollt und danach in einen Rollkontakt mit der nach oben gerichteten Oberflächeneinrichtung (26) des Fahrzeugs (22) kommt, so daß eine nachfolgende, nach hinten gerichtete Rollentnahmebewegung der ersten gepolsterten Sitzstruktur (40) von einer hinteren Öffnung in dem Fahrzeug (22) ermöglicht wird.

5. Fahrzeugsitzsystem nach Anspruch 4, dadurch gekennzeichnet, daß jede der hinteren Verbindungseinrichtungen (52) ein hinteres Hakenelement (53) umfaßt, welches schwenkbar auf der zugehörigen starren Rahmenstruktur montiert ist, um einen sicheren Eingriff mit dem entsprechenden der hinteren Ankerelemente (28) beim Eintritt der hinteren Verbindungseinrichtung (52) in die zugehörige hintere Vertiefung (24) zu gestatten.

6. Fahrzeugsitzsystem nach Anspruch 5, dadurch gekennzeichnet, daß die vorderen Radelemente (60) einen größeren Durchmesser als die hinteren Radelemente (62) haben und aus einem federnd komprimierbaren, gummiartigen Material hergestellt sind.

7. Fahrzeugsitzsystem nach Anspruch 6, dadurch gekennzeichnet, daß der Schlitz (51) mit offenem Ende für die vorderen Verbindungseinrichtungen (50) mit einer nach oben und hinten verlaufenden Nockenfläche (54) an der unteren Kante des Schlitzes (51) versehen ist, wobei die Nokkenfläche (54) zunehmend auf der Unterseite des entsprechenden vorderen Ankerelementes (27) angreift, wenn die zugehörige starre Rahmenstruktur in dem Basisbereich (21) der entsprechenden vorderen Vertiefung (24) wie oben erwähnt hineinrollt, wobei der zunehmende Eingriff bewirkt, daß die vorderen Radelemente (60) in einen Zustand nachgiebiger Kompression gegen den Basisbereich (21) der vorderen Vertiefung (24) eintritt.

8. Fahrzeugsitzsystem nach Anspruch 6, dadurch gekennzeichnet, daß die vorderen Radelemente (60) in dem Zustand nachgiebiger Kompression dadurch gehalten werden, daß die hinteren Hakenelemente (58) lösbar und sicher an den hinteren Ankerelementen (28) angreifen).

9. Fahrzeugsitzsystem nach Anspruch 8, dadurch gekennzeichnet, daß die Freigabe der hinteren Ankerelemente (28) durch die hinteren Hakenelemente (53) bewirkt, daß die vorderen Radelemente (60) aus dem Zustand der nachgiebigen Kompression freigegeben werden, so daß der Benutzer darin unterstützt wird, die nach oben und vorne gerichtete Schwenkbewegung der starren Rahmenstrukturen und der daran befestigten ersten gepolsterten Sitzstruktur (40) um die vorderen Ankerelemente (27) durchzuführen.

10. Fahrzeugsitzsystem nach Anspruch 9, dadurch gekennzeichnet, daß die Hakenelemente (53) in den Sperreingriff mit den hinteren Ankerelementen (28) vorgespannt sind.

11. Fahrzeugsitzsystem nach Anspruch 9, dadurch gekennzeichnet, daß jede der vorderen Spureinrichtungen (70) einen vorderen Spurverlängerungsabschnitt (74) aufweist, der sich horizontal nach hinten oberhalb der nach oben weisenden Oberflächeneinrichtung (26) von seiner Spureintrittsposition (72) zu der hinteren Öffnung des Fahrzeugs (22) erstreckt.

12. Fahrzeugsitzsystem nach Anspruch 11, dadurch gekennzeichnet, daß der vordere Spurverlängerungsabschnitt (74), der jeder der vorderen Spureinrichtungen (70) zugeordnet ist, sich longitudinal nach hinten zu einer Position erstreckt, die neben der hinteren Vertiefung (25) unmittelbar hinter der ersten Vertiefung (24) angeordnet ist, die dem vorderen Spurverlängerungsabschnitt (74) zugeordnet ist.

13. Fahrzeugsitzsystem nach Anspruch 12, dadurch gekennzeichnet, daß jede der hinteren Spureinrichtungen (80) einen hinteren Spurverlängerungsabschnitt (84) aufweist, der sich longitudinal nach hinten oberhalb der nach oben weisenden Oberflächeneinrichtung (26) von der zugehörigen Spureintrittsposition (82) zu der hinteren Öffnung des Fahrzeugs (22) erstreckt.

14. Fahrzeugsitzsystem nach Anspruch 13, dadurch gekennzeichnet, daß die vordere Spureinrichtung (70), die vorderen Spurverlängerungsabschnitte (74), die hinteren Spureinrichtungen (80) und die hinteren Spurverlängerungsabschnitte (84) zusammen mit den Verkleidungen der vorderen und hinteren Vertiefungen aus einem Kunststoffmaterial gebildet sind.

15. Fahrzeugsitzsystem nach Anspruch 14, dadurch gekennzeichnet, daß der Längsabstand zwischen den vorderen Spurverlängerungsabschnitten (74) und den hinteren Spurverlängerungsabschnitten (84) kleiner als der Durchmesser der vorderen Radelemente (60), jedoch größer als der Durchmesser der hinteren Radelemente (62) ist, so daß ermöglicht wird, daß die vorderen Radelemente (60) über die hinteren Vertiefungen (25) rollen, wenn die erste gepolsterte Sitzstruktur (40) nach vorne zu der entsprechenden Spureintrittsposition (72) gerollt wird, die der entsprechenden der vorderen Vertiefungen (25) zugeordnet ist.

16. Fahrzeugsitzsystem nach Anspruch 15, dadurch gekennzeichnet, daß die vorderen Radelemente (60) und die hinteren Radelemente (62) jeweils auf der Außenseite des ersten Paares der starren Rahmenstrukturen unter seitlichem Abstand angeordnet ist, der gleich dem seitlichen Abstand der vorderen Spureinrichtungen (70), der vorderen Spurverlängerungsabschnitte (74), der hinteren Spureinrichtungen (80) und der hinteren Spurverlängerungsabschnitte (84) ist.

17. Fahrzeugsitzsystem nach Anspruch 16, dadurch gekennzeichnet, daß die Bodeneinrichtung (23) ein zweites Paar von vorderen (24') und hinteren (25') Vertiefungen aufweist, die in bezug auf die Längsachse des Fahrzeuges (22) hinter dem ersten Paar von vorderen (24) und hinteren (25) Vertiefungen angeordnet sind und sich unterhalb der nach oben weisenden Oberflächeneinrichtung (26) erstrecken, wobei zweite vordere (27') und hintere (28') Ankerelemente sich über die zweiten vorderen (24') und hinteren (25') Vertiefungen respektive in einer Position erstrecken, die unterhalb der nach oben weisenden Oberflächeneinrichtung (26) liegt, wobei das Fahrzeugsitzsystem zusätzlich aufweist:
eine zweite gepolsterte Sitzstruktur (40');
ein zweites Paar von starren Rahmenstrukturen (42'), die seitlich neben einander gegenüberliegenden Enden der gepolsterten Sitzstruktur (40') angeordnet sind, wobei die zweite gepolsterte Sitzstruktur (40') auf dem zweiten Paar von starren Rahmenstrukturen montiert ist;
eine zweite vordere Verbindungseinrichtung (50') auf jeder der zweiten starren Rahmenstrukturen, um mit den jeweiligen der zweiten vorderen Ankerelemente (27') beim Eintritt der zweiten vorderen Verbindungseinrichtung (50') in die zweiten vorderen Vertiefungen (24') lösbar und sicher einzugreifen;
zweite hintere Verbindungseinrichtungen (52') auf jedem der zweiten starren Rahmenstrukturen, um mit den entsprechenden der zweiten hinteren Ankerelemente (28') beim Eintritt der zweiten hinteren Verbindungseinrichtung in die zweiten hinteren Vertiefungen (25') lösbar und sicher einzugreifen;
zweite vordere (60') und hintere (62') Radelemente, die auf jeder des zweiten Paares der starren Rahmenstrukturen neben den entsprechenden zweiten vorderen (50') und hinteren (52') Verbindungseinrichtungen montiert sind, so daß sie in Rollkontakt mit der nach oben weisenden Oberflächeneinrichtung (26) des Fahrzeuges stehen, wenn die zweiten vorderen (50') und hinteren (52') Verbindungseinrichtungen aus dem entsprechenden zweiten vorderen (24') und hinteren (25') Vertiefungen entfernt werden;
ein Paar von zweiten vorderen Spureinrichtungen (70'), die jeweils einzeln mit einem zweiten Paar von vorderen Vertiefungen (24') zugeordnet sind, wobei die zweiten vorderen Spureinrichtungen (70') sich jeweils nach vorne und unten von einer entsprechenden zweiten Spureintrittsposition (72') hinter der zugehörigen, zweiten vorderen Vertiefung (24') und oberhalb der nach oben weisenden Oberflächeneinrichtung (26) zu einem Basisberich (21') der entsprechenden zweiten vorderen Vertiefung (24) erstrecken, die unterhalb der nach oben weisenden Oberflächeneinrichtung (26) angeordnet sind;
ein Paar von zweiten hinteren Eintrittspositionen (82'), die jeweils einzeln dem Paar der zweiten hinteren Vertiefungen (25') zugeordnet sind, so daß die zweiten hinteren Vertiefungen (25') jeweils vor jeder der entsprechenden zweiten hinteren Eintrittspositionen (82') liegen;
wobei die zweiten vorderen Spureinrichtungen (70') jeweils auf der Bodeneinrichtung (23) angeordnet sind, um als Führungen ein entsprechendes der zweiten vorderen Radelemente (70') bei einer nach vorne gerichteten Rollbewegung der zweiten gepolsterten Sitzstruktur (40') aufzunehmen, und die so geformt und dimensioniert ist, um danach jedes der zweiten vorderen Radelemente (60') bei einer fortgesetzten, nach vorne gerichteten Rollbewegung von der entsprechenden zweiten Spureintrittsposition (72') zu dem Basisbereich 21' der zugehörigen zweiten vorderen Vertiefung (24') aufzunehmen, und um es dort zu gestatten, daß die zweiten vorderen Verbindungseinrichtungen (50') jeweils an den entsprechenden der zweiten vorderen Ankerelemente (27') lösbar und sicher angreift, um dadurch die zweite gepolsterte Sitzstruktur (40') an dem Fahrzeug (22) lösbar zu verankern; und wobei
die zweiten hinteren Eintrittspositionen (82') jeweils auf der Bodeneinrichtung (23) positioniert sind, um ein entsprechendes der zweiten hinteren Radelemente (62') bei einer vorwärtsgerichteten Rollbewegung der zweiten gepolsterten Sitzstruktur (40') nach unten und durchgehend aufzunehmen und danach es zu gestatten, daß jedes der zweiten hinteren Radelemente (62') in die entsprechenden zweiten hinteren Vertiefungen (25') bei fortgesetzter, nach vorne gerichteter Rollbewegung von der entsprechenden zweiten hinteren Eintrittsposition (82') in den Basisbereich (21') der zugeordneten hinteren Vertiefung (25') zu gestatten und es dort zu ermöglichen, daß die zweiten hinteren Verbindungseinrichtungen (52') an den entsprechenden der zweiten hinteren Ankerelemente (28') lösbar und sicher angreifen, um dadurch die zweite gepolsterte Sitzstruktur (40') an dem Fahrzeug (22) lösbar zu verankern.

18. Fahrzeugsitzsystem nach Anspruch 17, dadurch gekennzeichnet, daß jede der zweiten vorderen Spureinrichtungen (70') einen vorderen Spurverlängerungsabschnitt (74') hat, der sich horizontal nach hinten oberhalb der nach oben weisenden Oberflächeneinrichtung (26) von der entsprechenden zweiten Spureintrittsposition (72') zu der hinteren Öffnung des Fahrzeugs (22) erstreckt.

19. Fahrzeugsitzsystem nach Anspruch 18, dadurch gekennzeichnet, daß der zweite vordere Spurverlängerungsabschnitt (74'), der jeder der zweiten vorderen Spureinrichtungen (70') zugeordnet ist, sich in Längsrichtung nach hinten zu einer Position neben der hinteren Vertiefung unmittelbar hinter der zweiten vorderen Vertiefung (24') erstreckt, die dem zweiten vorderen Spurverlängerungsabschnitt (74') zugeordnet ist.

20. Fahrzeugsitzsystem nach Anspruch 19, dadurch gekennzeichnet, daß jede der zweiten hinteren Spureinrichtungen (80') einen zweiten hinteren Spurverlängerungsabschnitt (84') hat, der sich in Längsrichtung nach hinten oberhalb der nach oben weisenden Oberflächeneinrichtung (26) von der zugehörigen zweiten Spureintrittsposition (82') zu der hinteren Öffnung des Fahrzeugs (22) erstreckt.

21. Fahrzeugsitzsystem nach Anspruch 20, dadurch gekennzeichnet, daß die zweiten vorderen Spureinrichtungen (70'), die zweiten vorderen Spurverlängerungsabschnitte (74'), die zweiten hinteren Spureinrichtungen (80') und die zweiten hinteren Spurverlängerungsabschnitte (84') zusammen mit der Verkleidung der zweiten vorderen und der zweiten hinteren Vertiefung aus einem Kunststoffmaterial hergestellt ist.

22. Fahrzeugsitzsystem nach Anspruch 21, dadurch gekennzeichnet, daß die zweiten vorderen Radelemente (60') einen größeren Durchmesser als die zweiten hinteren Radelemente (62') haben, und daß sie aus einem nachgiebig komprimierbaren gummiartigen Material hergestellt sind.

23. Fahrzeugsitzsystem nach Anspruch 22, dadurch gekennzeichnet, daß die zweiten vorderen Spurverlängerungsabschnitte (74') und die zweiten hinteren Spurverlängerungsabschnitte (84') in Längsrichtung miteinander ausgerichtet sind, und daß der Längsabstand zwischen den zweiten vorderen Spurverlängerungsabschnitten (74') und den zweiten hinteren Spurverlängerungsabschnitten (84') kleiner als der Durchmesser der vorderen Radelemente (60'), jedoch größer als der Durchmesser der zweiten vorderen Radelemente (62') ist, so daß ermöglicht wird, daß die zweiten vorderen Radelemente (60') über die zweiten hinteren Vertiefungen (24') rollen, wenn die zweite gepolsterte Sitzstruktur (40') zu der entsprechenden zweiten Spureintrittsposition (72'), die der entsprechenden der zweiten vorderen Vertiefungen (24) zugeordnet ist, gerollt wird.

24. Fahrzeugsitzsystem nach Anspruch 23, in der das zweite Paar von starren Rahmenstrukturen seitlich voneinander um einen Abstand beabstandet sind, der im wesentlichen gleich dem seitlichen Abstand zwischen dem ersten Paar der starren Rahmenstrukturen ist, und bei der die vorderen Radelemente und die zweiten hinteren Radelemente jeweils auf der Innenbordseite des Paares der zweiten starren Rahmenstrukturen in seitlicher Beabstandung angeordnet sind, die gleich dem seitlichen Abstand der zweiten vorderen Spureinrichtungen, der zweiten vorderen Spurverlängerungsabschnitte, der zweiten hinteren Spureinrichtungen und der zweiten hinteren Spurverlängerungsabschnitte ist, so daß die zweiten vorderen Radelemente und die zweiten hinteren Radelemente sich nur mit den zweiten vorderen Spureinrichtungen und den zweiten hinteren Spureinrichtungen ausrichten, um eine Rollbewegung, wie erwähnt, in die entsprechenden der zweiten vorderen und hinteren Vertiefungen auszuführen.

## Revendications

1. Système de siège de véhicule pour utilisation avec un véhicule, comprenant un moyen formant plancher (23) comportant un moyen formant surface (26) orienté vers le haut, ledit moyen formant plancher (23) comportant une paire de gorges avant (24) et une paire de gorges arrières (25), disposées par rapport à un axe longitudinal (A) du véhicule (22), s'étendant au-dessous dudit moyen formant surface (26) orienté vers le haut, et des éléments d'ancrage avant (27) et arrière (28) s'étendant respectivement entre lesdites gorges avant (24) et arrière (25) dans une position inférieure audit moyen formant surface (26) orienté vers le haut, ledit système de siège de véhicule comprenant une première structure de siège coussinée (40), une première paire de structures de support rigides (42) disposées à côté d'extrémités latéralement opposées de ladite première structure de siège coussinée (40), ladite première structure de siège coussinée (40) étant montée sur ladite première paire de structures de support rigides (42), des moyens de raccordement avant (50) sur chacune desdites structures de support rigides (42) pour permettre un engagement de fixation amovible avec les éléments d'ancrage respectifs desdits éléments d'ancrage avant (27) lorsque lesdits moyens de raccordement avant (50) entrent dans lesdites gorges avant (24), des moyens de raccordement arrière (52) sur chacune desdites structures de support rigides (42) pour permettre un engagement de fixation amovible avec les éléments d'ancrage respectifs desdits éléments d'ancrage arrière (28) à l'entrée desdits moyens de raccordement arrière (52) dans lesdites gorges arrière (25), des éléments de roue avant (60) et arrière (62) montés sur chacune de ladite première paire de structures de support rigides (42) à côté des éléments de raccordement avant (50) et arrière (52) respectifs de manière à être en contact roulant, en fonctionnement, avec le moyen formant surface (26) orienté vers le haut du véhicule (22) lorsque lesdits moyens de raccordement avant (50) et arrière (52) sont retirés des gorges avant (24) et arrière (25) respectives, caractérisé en ce que chaque pair de gorges de ladite paire de gorges avant (24) est associée à une paire de moyens formant barres de raccordement (70), lesdits moyens formant barres de raccordement (70) s'étendant chacun vers l'avant et vers l'arrière, depuis une position arrière respective d'entrée de la barre de raccordement de la gorge avant (24) respective située au-dessus dudit moyen formant surface (26) orienté vers le haut, jusqu'à une zone de base de la gorge avant (24) respective située au-dessous dudit moyen formant surface (26) orienté vers le haut;
Chaque paire de gorges de ladite paire de gorges arrière (24) est associée à une paire de positions d'entrée arrière (82) de telle sorte que lesdites gorges arrière (25) sont chacune disposées à l'avant de la position d'entrée arrière (82) respective;
lesdits moyens formant barres de raccordement (70) sont chacun positionnés sur le moyen formant plancher (23) pour recevoir, en relation de guidage, l'un respectif desdits éléments de roue avant (60) lorsque ladite première structure de siège coussinée (40) effectue un mouvement de roulement vers l'avant, et est conformée et dimensionnée pour ensuite guider chacun desdits éléments de roue avant (60), lorsque le mouvement de roulement vers l'avant se poursuit, de la position d'entrée de barre de raccordement (72) respective à la zone de base (21) de la gorge avant associée (24) et pour, à ce niveau, permettre auxdits moyens de raccordement avant (50) d'engager chacun, de façon fixe et amovible des éléments respectifs parmi lesdits éléments d'ancrage avant (27), pour ainsi ancrer de façon amovible la première structure de siège coussinée (40) audit véhicule (22) ; et,
lesdites positions d'entrée arrière (82) sont chacune positionnées sur le moyen formant plancher (23) pour recevoir, dans une relation de traversée vers le bas, l'un respectif desdits éléments de roue arrière (62) lorsque ladite structure de siège coussinée (40) effectue un mouvement de roulement vers l'avant et pour ensuite permettre l'entrée de chacun desdits éléments de roue arrière (62) dans la gorge arrière (25) respective, lorsque le mouvement de roulement vers l'avant se poursuit, de la position d'entrée arrière (82) respective à la zone de base (31) de la gorge arrière associée (24) et pour, à ce niveau, permettre auxdits moyens de raccordement arrière (52) d'engager chacun de façon fixe et amovible les éléments respectifs parmi lesdits éléments d'ancrage arrière (28), pour ainsi ancrer de façon amovible la première structure de siège coussinée (40) audit véhicule (22).

2. Système de siège de véhicule selon la revendication 1, caractérisé en ce qu'il comprend en outre une paire de moyens formant barres de raccordement arrière (80) associées chacune à ladite paire de gorges arrière (25), ledit moyen formant barre de raccordement arrière (80) s'étendant vers l'avant et vers le bas, depuis ladite position arrière respective d'entrée (82) à l'arrière de ladite gorge arrière (24) respective et au-dessus dudit moyen formant surface orienté vers le haut, jusqu'à une zone de base (31) de la gorge arrière (25) respective située audessous dudit moyen formant surface (26) orienté vers le haut, lesdits moyens formant barres de raccordement arrière (80) étant chacun positionnés sur le moyen formant plancher (23) pour recevoir, en relation de guidage, l'un respectif desdits éléments de roue arrière (62) lorsque ladite première structure de siège coussinée (40) effectue un mouvement de roulement vers l'avant, et est conformée et dimensionnée pour ensuite guider chacun desdits éléments de roue arrière (62), lorsque le mouvement de roulement vers l'avant se poursuit, de la position d'entrée de la barre de raccordement (82) respective à la zone de base (31) de la gorge arrière associée (25) et pour, à ce niveau, permettre auxdits moyens de raccordement arrière (52) d'engager chacun de façon fixe et amovible les éléments respectifs parmi lesdits éléments d'ancrage arrière (28), pour ainsi ancrer de façon amovible la première structure de siège coussinée (40) audit véhicule.

3. Système de siège de véhicule selon la revendication 2, caractérisé en ce que lesdits éléments d'ancrage avant (27) sont de section sensiblement circulaire et en ce que les moyens de raccordement avant (50) comprennent chacun une fente à extrémité ouverte (51) formée dans la structure de support rigide respective pour un ancrage périphérique et un engagement avec les éléments d'ancrage avant (27) respectifs lorsque lesdits éléments de roue avant (60) sont positionnés chacun dans la zone de base (21, 31) des gorges avant et arrière (24, 25) respectives et de manière à permettre un mouvement de pivotement vers le haut et vers l'avant des structures de support rigide et de la structure de siège coussinée (40) qui y est attachée autour desdits éléments d'ancrage avant (27) traversant les gorges avant (24) lorsque les éléments de roue arrière (62) sont retirés des gorges arrière (25) en conséquence du soulèvement vers le haut et vers l'avant d'une partie arrière de ladite première structure de siège coussinée (40).

4. Système de siège de véhicule selon la revendication 3, caractérisé en ce que ladite fente à extrémité ouverte (51) permet la libération desdits éléments d'ancrage avant (27) dudit engagement d'ancrage périphérique sur une plage choisie dudit mouvement de pivotement vers le haut et vers l'avant desdites structures de support rigides autour des éléments d'ancrage avant (27), sur laquelle plage de mouvement de pivotement lesdits éléments de roue avant (60) sont positionnés en contact de roulement en fonctionnement avec les moyens formant barres de liaison avant (70) respective pour permettre à chacun de rouler vers le haut et vers l'arrière le long des moyens formant barres de liaison avant (70) respectifs vers ladite position d'entrée de barre de liaison (72), et prennent ensuite ledit contact de roulement en fonctionnement avec ledit moyen formant surface (26) orienté vers le haut du véhicule (22) pour ainsi permettre un retrait ultérieur, en roulant vers l'arrière, de la première structure de siège coussinée (40) d'une ouverture arrière du véhicule (22).

5. Système de siège de véhicule selon la revendication 4, caractérisé en ce que chacun desdits moyens de raccordement arrière (52) comprend un élément de crochet arrière (53) monté de façon pivotante sur la structure de support rigide associée pour s'engager de façon fixe et amovible avec l'un respectif desdits éléments d'ancrage arrière (28) lorsque le moyen de raccordement arrière (52) entre dans ladite gorge arrière associée (24).

6. Système de siège de véhicule selon la revendication 5, caractérisé en ce que lesdits éléments de roue avant (60) ont un diamètre plus grand que lesdits éléments de roue arrière (62) et sont fabriqués à partir d'un matériau caoutchouté, élastiquement compressible.

7. Système de siège de véhicule selon la revendication 6, caractérisé en ce que la fente à extrémité ouverte (51) de chaque moyen de raccordement avant (50) est munie d'une surface de came (54) inclinée vers le haut et vers l'arrière sur le bord inférieur de ladite fente (51), ladite surface de came (54) s'engageant progressivement avec le côté inférieur de l'élément d'ancrage avant (27) respectif lorsque la structure de support rigide associée entre en roulant dans la zone de base (21) de la gorge avant (24) respective comme indiqué ci-dessus, ledit engagement progressif faisant prendre auxdits éléments de roue avant (60) un état de compression élastique contre la zone de base (21) des gorges avant (24).

8. Système de siège de véhicule selon la revendication 7, caractérisé en ce que les éléments de roue avant (60) sont maintenus dans ledit état de compression résiliente par ledit engagement de fixation amovible des éléments d'ancrage arrière (28) par lesdits éléments de crochet arrière (53).

9. Système de siège de véhicule selon la revendication 8, caractérisé en ce que la libération des éléments d'ancrage arrière (28) par les éléments de crochet arrière (53) entraîne la libération desdits éléments de roue avant (60) dudit état de compression résiliente, aidant ainsi un utilisateur à effectuer ledit mouvement de pivotement vers le haut et vers l'avant des structures de support rigide et de la première structure de siège coussinée (40) qui y est attachée autour desdits éléments d'ancrage avant (27).

10. Système de siège de véhicule selon la revendication 9, caractérisé en ce que lesdits éléments de crochet (53) sont inclinés vers ledit engagement de verrouillage avec lesdits éléments d'ancrage arrière (28).

11. Système de siège de véhicule selon la revendication 9, caractérisé en ce que chacun des moyens formant barres de raccordement avant (70) comporte une partie d'extension de barre de raccordement avant (74) s'étendant horizontalement, vers l'arrière et au-dessus dudit moyen formant surface (26) orienté vers le haut, depuis sa position d'entrée de barre de raccordement (72) vers l'ouverture arrière du véhicule (22).

12. Système de siège de véhicule selon la revendication 11, caractérisé en ce que la partie d'extension de barre de raccordement avant (74) associée à chacun des moyens formant barres de raccordement avant (70) s'étend longitudinalement vers l'arrière, en une position adjacente à la gorge arrière (25), juste derrière la gorge avant (24) associée à ladite partie d'extension de barre de raccordement avant (74).

13. Système de siège de véhicule selon la revendication 12, caractérisé en ce que chacun des moyens formant barres de raccordement arrière (80) comporte une partie d'extension de barre de raccordement arrière (84) s'étendant longitudinalement, vers l'arrière et au-dessus dudit moyen formant surface (26) orienté vers le haut, depuis sa position d'entrée de barre de raccordement (82) vers ladite ouverture arrière du véhicule (22).

14. Système de siège de véhicule selon la revendication 13, caractérisé en ce que lesdits moyens formant barres de raccordement avant (70), lesdites parties d'extension de barre de raccordement avant (74), lesdits moyens formant barre de raccordement arrière (80) et lesdites parties d'extension de barre de raccordement arrière (84) sont formés, ainsi que des chemises de gorge avant et arrière, à partir d'un matériau plastique.

15. Système de siège de véhicule selon la revendication 14, caractérisé en ce que la distance longitudinale entre les parties d'extension de barre de raccordement avant (74) et les parties d'extension de barre de raccordement arrière (84) est inférieure au diamètre des éléments de roue avant (60) mais supérieure au diamètre des éléments de roue arrière (62), de manière à permettre auxdits éléments de roue avant (60) de rouler par-dessus lesdites gorges arrière (25) lors d'un roulement vers l'avant de la première structure de siège coussinée (40) vers la position d'entrée de barre de raccordement (72) respective associée à une gorge respective desdites gorges avant (25).

16. Système de siège de véhicule selon la revendication 15, caractérisé en ce que lesdits éléments de roue avant (60) et lesdits éléments de roue arrière (62) sont chacun montés sur le côté extérieur de ladite première paire de structures de support rigide en une relation d'espacement latéral égale à la relation d'espacement latérale desdits moyens formant barre de raccordement avant (70), desdites parties d'extension de barre de raccordement avant (74), desdits moyens formant barre de raccordement arrière (80) et desdites parties d'extension de barre de raccordement arrière (84).

17. Système de siège de véhicule selon la revendication 16, caractérisé en ce que le moyen formant plancher (23) comporte une seconde paire de gorges avant (24') et arrière (25'), disposées, par rapport à l'axe longitudinal du véhicule (22), vers l'arrière de ladite première paire de gorges avant (24) et arrière (25), s'étendant au-dessous dudit moyen formant surface (26) orienté vers le haut, et des seconds éléments d'ancrage avant (27') et arrière (28') s'étendant respectivement entre lesdites secondes gorges avant (24') et arrière (25') dans une position inférieure audit moyen formant surface (26) orienté vers le haut, ledit système de siège de véhicule comprenant en outre :
une seconde structure de siège coussinée (40') ;
une seconde paire de structures de support rigides (42') disposées à côté d'extrémités latéralement opposées de ladite structure de siège coussinée (40'), ladite seconde structure de siège coussinée (40') étant montée sur ladite seconde paire de structures de support rigides ;
des second moyens de raccordement avant (50') sur chacune desdites structures de support rigides pour permettre un engagement de fixation amovible avec les éléments d'ancrage respectifs desdits seconds éléments d'ancrage avant (27') lorsque lesdits seconds moyens de raccordement avant (50') entrent dans lesdites secondes gorges avant (24') ;
des seconds moyens de raccordement arrière (52') sur chacune desdites structures de support rigides pour permettre un engagement de fixation amovible avec les éléments d'ancrage respectifs desdits second éléments d'ancrage arrière (28') lorsque lesdits seconds moyens de raccordement arrière entrent dans lesdites secondes gorges arrière (25') ;
des seconds éléments de roue avant (60') et arrière (62') montés sur chaque structure de ladite seconde paire de structures de support rigides à côté des seconds éléments de raccordement avant (50') et arrière (52') respectifs de manière à être en contact roulant, en fonctionnement, avec le moyen formant surface (26) orienté vers le haut du véhicule lorsque lesdits seconds moyens de raccordement avant (50') et arrière (52') sont retirés des gorges avant (24') et arrière (25') respectives ;
une paire de seconds moyens formant barres de raccordement (70') associés chacun avec ladite seconde paire de gorges avant (24'), lesdits second moyens de barre de raccordement avant (70') s'étendant chacun vers l'avant et vers le bas, depuis une seconde position d'entrée (72') respective à l'arrière de la seconde gorge avant (24') respective et au-dessus dudit moyen formant surface (26) orienté vers le haut, jusqu'à une zone de base (21') de la seconde gorge avant (24') respective située au-dessous dudit moyen formant surface (26) orienté vers le haut ;
chacune d'une paire de secondes positions d'entrée arrière (82') associée à ladite paire de secondes gorges arrière (25') de telle sorte que lesdites secondes gorges arrière (25') sont chacune disposées à l'avant de la seconde position d'entrée arrière (82') respective ;
lesdits seconds moyens formant barres de raccordement (70') étant chacun positionnés sur le moyen formant plancher (23) pour recevoir, en relation de guidage, l'un respectif desdits seconds éléments de roue avant (60') lorsque ladite seconde structure de siège coussinée (40') effectue un mouvement de roulement vers l'avant, et est conformée et dimensionnée pour ensuite guider chacun desdits seconds éléments de roue avant (60'), lorsque le mouvement de roulement vers l'avant se poursuit, de la seconde position d'entrée de barre de raccordement (72') respective à la zone de base (21') de la seconde gorge avant associée (24') et pour, à ce niveau, permettre auxdits moyens de raccordement avant (50') d'engager chacun de façon fixe et amovible les éléments respectifs parmi lesdits seconds éléments d'ancrage avant (27'), pour ainsi ancrer de façon amovible la seconde structure de siège coussinée (40') audit véhicule (22) ; et,
lesdites secondes positions d'entrée arrière (82') sont chacune positionnées sur le moyen formant plancher (23) pour recevoir, dans une relation de traversée vers le bas, l'un respectif desdits seconds éléments de roue arrière (62') lorsque ladite seconde structure de siège coussinée (40') effectue un mouvement de roulement vers l'avant et pour ensuite permettre l'entrée de chacun desdits seconds éléments de roue arrière (62') dans la seconde gorge arrière (25') respective, lorsque le mouvement de roulement vers l'avant se poursuit, de la seconde position d'entrée arrière (82') respective à la zone de base (32') de la seconde gorge arrière associée (25') et pour, à ce niveau, permettre auxdits seconds moyens de raccordement arrière (52') d'engager chacun de façon fixe et amovible les éléments respectifs parmi lesdits seconds éléments d'ancrage arrière (28'), pour ainsi ancrer de façon amovible la seconde structure de siège coussinée (40') audit véhicule (22).

18. Système de siège de véhicule selon la revendication 17, caractérisé en ce que chacun desdits seconds moyens formant barres de raccordement avant (70') comporte une partie d'extension de barre de raccordement avant (74') s'étendant horizontalement, vers l'arrière et au-dessus dudit moyen formant surface (26) orienté vers le haut, depuis sa seconde position d'entrée de barre de raccordement (72') respective vers ladite ouverture arrière du véhicule (22).

19. Système de siège de véhicule selon la revendication 18, caractérisé en ce que la seconde partie d'extension de barre de raccordement avant (74') associée à chacun desdits seconds moyens formant barres de raccordement avant (70') s étend longitudinalement vers l'arrière, jusqu'à une position adjacente à la gorge arrière, juste derrière la seconde gorge avant (24') associée à ladite seconde partie d'extension de barre de raccordement avant (74').

20. Système de siège de véhicule selon la revendication 19, caractérisé en ce que chacun des second moyens formant barres de raccordement arrière (80') comporte une seconde partie d'extension de barre de raccordement arrière (84') s étendant longitudinalement, vers l'arrière et au-dessus dudit moyen formant surface (26) orienté vers le haut, depuis sa seconde position d'entrée de barre de raccordement (82') associée vers ladite ouverture arrière du véhicule (22).

21. Système de siège de véhicule selon la revendication 20, caractérisé en ce que lesdits second moyens formant barres de raccordement avant (70'), lesdites secondes parties d'extension de barre de raccordement avant (74'), lesdits seconds moyens formant barre de raccordement arrière (80') et lesdites secondes parties d'extension de barre de raccordement arrière (84') sont formés, ainsi que des secondes chemises de gorge avant et arrière, à partir d'un matériau plastique.

22. Système de siège de véhicule selon la revendication 21, caractérisé en ce que lesdits seconds éléments de roue avant (60') ont un diamètre plus grand que lesdits seconds éléments de roue arrière (62') et sont fabriqués à partir d'un matériau caoutchouté, élastiquement compressible.

23. Système de siège de véhicule selon la revendication 22, caractérisé en ce que la seconde partie d'extension de barre de raccordement avant (74') et les secondes parties d'extension de barre de raccordement arrière (84') sont alignées longitudinalement les unes avec les autres, et la distance longitudinale entre les secondes parties d'extension de barre de raccordement avant (74') et les secondes parties d'extension de barre de raccordement arrière (84') est inférieure au diamètre des éléments de roue avant (60') mais supérieure au diamètre des éléments de roue avant (62'), de manière à permettre auxdits seconds éléments de roue arrière (60') de rouler par-dessus lesdites secondes gorges arrière (24') lors d'un roulement vers l'avant de la seconde structure de siège coussinée (40') vers la seconde position d'entrée de barre de raccordement (72') respective associée à ladite gorge respective desdites secondes gorges avant (24').

24. Système de siège de véhicule selon la revendication 23, dans lequel ladite seconde paire de structures de support rigides sont espacées latéralement l'une de l'autre, d'une distance sensiblement égale à l'espacement latéral entre ladite première paire de structure de support rigides, et dans lequel lesdits éléments de roue avant et lesdits seconds éléments de roue arrière sont chacun montés sur le côté intérieur de ladite seconde paire de structures de support rigide en une relation d'espacement latéral égale à la relation d'espacement latérale desdits seconds moyens formant barre de raccordement avant, desdites secondes parties d'extension de barre de raccordement avant, desdits seconds moyens formant barre de raccordement arrière et desdites secondes parties d'extension de barre de raccordement arrière, de telle sorte que lesdits seconds éléments de roue avant et lesdits seconds éléments de roue arrière s'aligneront en fonctionnement uniquement avec lesdits seconds moyens de barres de raccordement avant et lesdits seconds moyens formant barres de raccordement arrière pour effectuer un mouvement de roulement, comme indiqué ci-dessus, pour s'engager dans les gorges respectives desdites secondes gorges avant et arrière.
